# FASCICULE DE BREVET EUROPEEN

(11) **EP 3 167 617 B1**
(45) Date de publication et mention de la délivrance du brevet: **28.08.2019**
(21) Numéro de dépôt: 15734379.9
(22) Date de dépôt: 07.07.2015
(51) Int. Cl.: H04N 21/274, H04N 21/4147, H04N 21/845, H04N 21/63, H04N 21/4335, H04N 21/433

(54) **PROCÉDÉ ET DISPOSITIF D'ENREGISTREMENT À DISTANCE DE PROGRAMMES VIDÉO**
VERFAHREN UND VORRICHTUNG ZUR FERNAUFZEICHNUNG VON VIDEOPROGRAMMEN
METHOD AND DEVICE FOR REMOTELY RECORDING VIDEO PROGRAMS

(30) Priorité: 08.07.2014 FR 1456571
(43) Date de publication de la demande: 17.05.2017
(73) Titulaire: SAGEMCOM BROADBAND SAS, 92500 Rueil Malmaison (FR)
(72) Inventeur: SARTORI, David, 92500 Rueil Malmaison (FR); SABATIER, Pierre, 92500 Rueil Malmaison (FR)
(74) Mandataire: Cabinet Le Guen Maillet
(86) Numéro de dépôt international: PCT/EP2015/065416
(87) Numéro de publication internationale: WO 2016/005353

(56) Documents cités:
- WO-A1-2008/113948
- US-A1- 2002 046 404
- US-A1- 2014 013 368
- US-A1- 2014 109 142
- US-B2- 7 930 723

## Description

La présente invention concerne un procédé d'enregistrement à distance d'un programme vidéo, un dispositif récepteur apte à enregistrer à distance un flux binaire représentatif d'un programme vidéo, un dispositif serveur apte à enregistrer un flux binaire représentatif d'un programme vidéo et un système d'enregistrement de programmes vidéo comprenant ledit dispositif serveur et au moins un dispositif client mettant en oeuvre le procédé d'enregistrement.

Ces derniers années ont vu une explosion des moyens d'accès à des programmes vidéo (ou programmes télévisuels) et une multiplication des programmes vidéo. Ainsi, alors que dans les années quatre-vingt, seuls des réseaux de télédiffusion (« broadcast network» en terminologie anglo-saxonne) analogiques étaient disponibles, un particulier a, de nos jours, accès à des programmes vidéo à travers de multiples réseaux de télédiffusion numériques tels que des réseaux de télédiffusion TNT (Télévision Numérique Terrestre), ADSL (Ligne de souscription numérique asymétrique, « Asymmetric Digital Subscriber Line » en terminologie anglo-saxonne) et 3G/4G-LTE (réseau de troisième/quatrième génération). Ces programmes vidéo (ou programmes télévisuels), peuvent être visualisés sur de multiples dispositifs de visualisation tels qu'un écran de télévision, un écran d'ordinateur, une tablette numérique ou un téléphone portable intelligent (« smartphone » en terminologie anglo-saxonne). La multiplication des programmes vidéo est en grande partie due à une numérisation des données représentatives de ces programmes vidéo. En effet, à qualité quasi identique, un programme vidéo numérisé nécessite une bande-passante de transmission très inférieure à la bande passante de transmission nécessaire pour un programme vidéo analogique. A qualité d'image constante, la numérisation permet donc de transmettre sur un même canal de communication un nombre de programmes vidéo numérisés très supérieur à un nombre de programmes vidéo analogiques.

La numérisation d'un programme vidéo comprend un échantillonnage suivi d'une compression des données analogiques représentatives du programme vidéo dans un format de compression de données audiovisuelles. Il existe différents formats de compression de données audiovisuelles comprenant des formats de compression de données vidéo, des formats de compression de données audio et des formats de multiplexage et de synchronisation des données audio et vidéo.

Le format H264/AVC (ISO/IEC 14496-10 - MPEG-4 Part 10, codage vidéo avancé (« Advanced Video Coding » en terminologie anglo-saxonne) / ITU-T H.264) est actuellement le format de compression le plus utilisé pour la diffusion de programmes vidéo. Ce format devrait toutefois être rapidement supplanté par le standard émergeant HEVC (ISO/IEC 23008-2 - MPEG-H Part 2, codage vidéo haute efficacité (« High Efficiency Video Coding » en terminologie anglo-saxonne) / ITU-T H.265) offrant de meilleures performances de compression pour des vidéos de très hautes résolutions.

Le format de compression audio AAC (ISO/IEC 13818-7, ISO/IEC 14496-3) est très utilisé pour la compression de données audio.

Le format d'encapsulation MPEG-TS (ISO/IEC 13818-1) est fréquemment utilisé, notamment par les standards de diffusion DVB (diffusion vidéo numérique, « Digital Video Broadcast » en terminologie anglo-saxonne) et ATSC (comité des systèmes de télévision avancés, « Advanced Television Systems Committee » en terminologie anglo-saxonne), pour encapsuler des flux vidéo et des flux audio dans un même flux binaire et pour assurer la synchronisation de ces flux.

Il est très courant pour un particulier de vouloir enregistrer un programme audio-visuel. Bon nombre de systèmes de réception de programmes vidéo numérisés tels que, par exemple, un décodeur numérique (qu'on appelle communément « décodeur ») associé à une passerelle résidentielle connectée au réseau Internet (qu'on appelle communément « box internet ») possède des moyens d'enregistrement de flux binaires correspondant à des programmes vidéo tels qu'un disque dur. Nous appelons par la suite pour simplifier, l'ensemble constitué d'un décodeur numérique et d'une passerelle résidentielle « récepteur ». Les moyens d'enregistrement des récepteurs sont en général limités et ne permettent pas de stocker un volume important de données.

Le document US 2014/013368A1 décrit un procédé permettant l'enregistrement d'un contenu vidéo dans un réseau par un ou plusieurs récepteurs. Un facteur de duplication est estimé en fonction du nombre de requêtes d'enregistrement reçues pour un programme donné, de la bande passante disponible sur le réseau et du débit du contenu vidéo. Ce facteur de duplication détermine le nombre de copie d'un même programme à stocker sur le réseau de manière à s'assurer que, lorsqu'un récepteur voudra accéder au programme vidéo, il pourra toujours y accéder à partir d'au moins une copie stockée dans le réseau.

Une solution possible serait d'utiliser les capacités réseau d'un récepteur pour sauvegarder des flux binaires sur un serveur d'enregistrement distant (dit « serveur distant ») dans le réseau internet. Toutefois, alors qu'un récepteur possède un débit de réception compatible avec une réception d'un flux binaire correspondant à un programme vidéo, le récepteur possède un débit d'émission très limité, incompatible avec une transmission d'un flux binaire vers un serveur distant dans un temps raisonnable. Le débit d'émission est défini ici comme le débit maximum théorique auquel un récepteur peut transmettre des données.

L'invention a pour objectif de résoudre les problèmes mentionnés ci-dessus. L'invention vise notamment à proposer un procédé d'enregistrement à distance d'un programme vidéo permettant à une pluralité de récepteurs devant enregistrer un même programme vidéo sur un serveur distant de collaborer pour enregistrer ledit programme vidéo, un dispositif récepteur et un dispositif serveur apte à mettre en oeuvre ledit procédé et un système d'enregistrement de programmes vidéo comprenant ledit dispositif serveur et au moins un dispositif client et mettant en oeuvre ledit procédé.

Différents aspects de la présente invention sont décrits ci-dessous, mais ces aspects sont à interpreter comme des examples. La portée de l'invention est définie par les seules revendications attenantes.

A cet effet, selon un premier aspect de la présente invention, la présente invention concerne un procédé d'enregistrement d'un programme vidéo, ledit programme vidéo étant reçu sous la forme d'un flux binaire par au moins un récepteur, dit récepteur enregistreur, devant enregistrer le programme vidéo sur un serveur distant, chaque récepteur enregistreur étant relié au serveur distant par un réseau de communication et étant caractérisé par un débit d'émission, le flux binaire étant caractérisé par un débit d'encodage, caractérisé en ce que le procédé est mis en oeuvre par chaque récepteur enregistreur et en ce que pour un récepteur enregistreur, le procédé comprend des étapes d'obtention d'un facteur de compression du programme vidéo, de division du flux binaire en un ensemble de tronçons successifs en fonction du facteur de compression obtenu, de détermination d'un sous ensemble de tronçons à transmettre au serveur distant à partir de l'ensemble de tronçons successifs en fonction d'une valeur de décalage et d'une valeur d'écart entre tronçons correspondant au facteur de compression, la valeur de décalage étant un reste d'une division entière d'un nombre aléatoire déterminé par le récepteur enregistreur par le facteur de compression, et de transmission des tronçons du sous ensemble de tronçons déterminé au serveur distant en vue de leur sauvegarde.

En répartissant, lorsque c'est possible, la transmission des tronçons entre plusieurs récepteurs enregistreurs, le procédé permet de ne pas saturer le débit d'émission d'un récepteur enregistreur.

Selon un mode de réalisation, le facteur de compression est calculé en fonction du débit d'encodage du programme vidéo, du débit d'émission du récepteur enregistreur, d'un nombre de récepteurs enregistreurs devant enregistrer le programme vidéo, d'un nombre de connexions admises par le serveur distant et/ou d'un nombre de programmes vidéo enregistrés simultanément par le récepteur enregistreur.

De cette manière, les tronçons sont transmis avec un débit de transmission inférieur ou égal au débit d'émission du récepteur enregistreur, mais peut prendre en compte d'autres paramètres pour mieux adapter le débit de transmission.

Selon un mode de réalisation, le facteur de compression est calculé par le récepteur enregistreur ou par le serveur distant qui le transmet au récepteur enregistreur.

Un calcul du facteur de compression par le récepteur enregistreur permet de s'assurer que le facteur de compression est bien adapté au débit d'émission du récepteur enregistreur. Par ailleurs, puisque le serveur distant possède une connaissance centralisée de tous les récepteurs enregistreurs ayant demandé un programme, le calcul du facteur de compression par le serveur distant permet une adaptation du facteur de compression à un ensemble de récepteurs enregistreurs.

Selon un mode de réalisation, les tronçons de l'ensemble de tronçons successifs ont une taille fixe, selon une mesure de taille représentative d'un nombre de données binaires.

Selon un mode de réalisation, les tronçons de l'ensemble de tronçons successifs ont une taille fixe, selon une mesure de taille représentative d'une durée, chaque tronçon de l'ensemble de tronçons successifs correspondant à un intervalle de temps fixe dans le programme vidéo.

Utiliser des tronçons de taille fixe facilite l'étape de reconstitution du flux binaire correspondant au programme vidéo.

Selon un mode de réalisation, les tronçons de l'ensemble de tronçons successifs sont ordonnés en fonction de leur ordre d'apparition dans le flux binaire et en ce que lors de la détermination du sous ensemble de tronçons à transmettre au serveur distant, le récepteur enregistreur sélectionne des tronçons de l'ensemble de tronçons successifs espacés d'un nombre de tronçons égal à la valeur d'écart entre tronçons en parcourant l'ensemble de tronçons successifs à partir d'un tronçon correspondant à la valeur de décalage.

Un récepteur enregistreur ne transmet alors qu'un sous-ensemble de tronçons compatible avec son débit d'émission.

Selon un mode de réalisation, préalablement à la transmission des tronçons du sous-ensemble de tronçons, le récepteur enregistreur transmet au serveur distant un ensemble de métadonnées représentatives du programme vidéo comprenant la valeur de décalage, le facteur de compression et une valeur représentative de la taille des tronçons.

L'ensemble de métadonnées permet, entre autres, au serveur distant de réassembler les tronçons.

Selon un mode de réalisation, lorsque le récepteur enregistreur est informé par le serveur distant qu'un autre récepteur enregistreur devant enregistrer le programme vidéo est associé à la même valeur de décalage, le récepteur enregistreur interrompt la transmission des tronçons.

De cette manière, on évite d'involontaires multiples transmissions d'un même tronçon.

Selon un mode de réalisation, le récepteur enregistreur sauvegarde en outre les tronçons de l'ensemble de tronçons successifs ou les tronçons du sous-ensemble de tronçons dans une unité de stockage locale du serveur distant.

La sauvegarde des tronçons dans une unité de stockage locale permet au récepteur enregistreur par exemple de mettre en oeuvre une application d'affichage du programme vidéo décalé dans le temps.

Dans un mode de réalisation, le récepteur enregistreur envoie périodiquement une demande d'autorisation de suppression de tronçons au serveur distant, et, en cas de réception d'une réponse positive à une demande d'autorisation de suppression de tronçons, efface des tronçons enregistrés dans l'unité de stockage locale.

En centralisant une décision d'effacement de tronçons au niveau du serveur distant, on permet au serveur distant de contrôler la sauvegarde des tronçons.

Selon un mode de réalisation, suite à l'enregistrement d'au moins une partie du flux binaire sur le serveur distant, le récepteur enregistreur transmet au serveur distant une demande d'affichage du programme vidéo, reçoit des tronçons correspondant au flux binaire de la part du serveur distant et/ou d'au moins un autre récepteur enregistreur ayant sauvegardé des tronçons du flux binaire et reconstitue le flux binaire en vue de son affichage.

Le serveur distant n'est donc pas le seul à pouvoir répondre à une demande d'affichage d'un programme vidéo enregistré. De cette manière, on évite de surcharger le serveur distant lorsque c'est possible.

Selon un deuxième aspect de la présente invention, la présente invention concerne un procédé d'enregistrement d'un programme vidéo, ledit programme vidéo étant reçu sous la forme d'un flux binaire par au moins un récepteur, dit récepteur enregistreur, devant enregistrer le programme vidéo sur un serveur distant, chaque récepteur enregistreur étant relié au serveur distant par un réseau de communication et étant caractérisé par un débit d'émission, le flux binaire étant caractérisé par un débit d'encodage. Le procédé comprend, lorsqu'il est mis en oeuvre par le serveur distant, des étapes d'obtention d'au moins un ensemble de métadonnées, chaque ensemble de métadonnées ayant été transmis par un récepteur enregistreur et comprenant une valeur de décalage, la valeur de décalage étant un reste d'une division entière d'un nombre aléatoire déterminé par le récepteur enregistreur par un facteur de compression obtenu par le récepteur enregistreur, de recherche de récepteurs enregistreurs associés à une même valeur de décalage dans un ensemble de récepteurs enregistreurs ayant transmis des métadonnées pour le programme vidéo, d'envoi d'une autorisation de transmission à au moins un récepteur enregistreur différent pour chaque valeur de décalage différente reçue, de réception du flux binaire sous forme de tronçons de la part des récepteurs enregistreurs ayant reçu une autorisation de transmission, chaque récepteur enregistreur ayant divisé le flux binaire en un ensemble de tronçons successifs en fonction du facteur de compression, et ayant déterminé les tronçons qu'il transmet au serveur distant à partir de l'ensemble de tronçons successifs en fonction de la valeur de décalage et d'une valeur d'écart entre tronçons correspondant au facteur de compression, et de reconstitution du flux binaire en vue de son stockage dans une unité de stockage du serveur distant.

Le serveur distant contrôle ainsi l'enregistrement du flux binaire correspondant au programme vidéo à enregistrer.

Selon un mode de réalisation, lorsqu'après réception des tronçons de la part d'au moins un récepteur enregistreur pour chaque valeur de décalage différente reçue, l'absence de certains tronçons empêche la reconstitution du flux binaire, le serveur distant transmet à au moins un récepteur enregistreur une information représentative d'au moins un tronçon manquant, de sorte à provoquer l'envoi de chaque tronçon manquant.

Le serveur distant s'assure ainsi qu'aucun tronçon ne manque.

Selon un mode de réalisation suite à la réception d'une demande d'autorisation d'effacement de tronçons de la part d'un récepteur enregistreur, le serveur distant transmet une autorisation d'effacement au récepteur enregistreur comprenant une liste de tronçons à effacer.

Le serveur distant contrôle donc l'effacement de tronçons sauvegardés dans des unités de stockage locales des récepteurs enregistreurs.

Selon un mode de réalisation, préalablement à une ouverture d'une connexion pour au moins un récepteur enregistreur pour chaque valeur de décalage différente reçue, le serveur distant attend un délai prédéfini.

Le serveur distant s'assure ainsi que tous les récepteurs enregistreurs devant enregistrer le programme vidéo ont été identifiés.

Selon un mode de réalisation, lors de la réception d'un tronçon, chaque tronçon est associé à des informations comprenant une information représentative de la position du tronçon dans le flux binaire et une information représentative du récepteur enregistreur ayant sauvegardé le tronçon.

Dans un mode de réalisation, lorsque, suite à la reconstitution du flux binaire, le serveur distant reçoit une demande d'affichage du programme vidéo de la part d'un premier récepteur enregistreur, le serveur distant construit une liste indiquant pour au moins un tronçon du flux binaire, au moins un second récepteur enregistreur comprenant une unité de stockage locale dans laquelle ledit tronçon est sauvegardé.

De cette manière, lors de l'affichage d'un programme vidéo, un récepteur enregistreur peut demander des tronçons à un autre récepteur enregistreur plutôt qu'au serveur distant, ce qui évite de surcharger le serveur distant.

Selon un troisième aspect de la présente invention, la présente invention concerne un dispositif récepteur apte à enregistrer à distance un flux binaire représentatif d'un programme vidéo, caractérisé en ce que le dispositif récepteur comprend des moyens d'obtention d'un facteur de compression du programme vidéo, des moyens de division du flux binaire en un ensemble de tronçons successifs en fonction du facteur de compression obtenu, des moyens de détermination d'un sous-ensemble de tronçons à transmettre à un dispositif serveur distant à partir de l'ensemble de tronçons successifs en fonction d'une valeur de décalage et d'une valeur d'écart entre tronçons correspondant au facteur de compression, la valeur de décalage étant un reste d'une division entière d'un nombre aléatoire déterminé par le dispositif récepteur par le facteur de compression, et des moyens de transmission des tronçons du sous-ensemble de tronçons déterminés au dispositif serveur distant en vue de leur sauvegarde.

Selon un quatrième aspect de la présente invention, la présente invention concerne un dispositif serveur apte à enregistrer un flux binaire représentatif d'un programme vidéo, le dispositif serveur comprenant des moyens d'obtention d'au moins un ensemble de métadonnées, chaque ensemble de métadonnées ayant été transmis par un dispositif récepteur et comprenant une valeur de décalage, la valeur de décalage étant un reste d'une division entière d'un nombre aléatoire déterminé par le dispositif récepteur par un facteur de compression obtenu par le dispositif récepteur, des moyens de recherche de dispositifs récepteurs associés à une même valeur de décalage dans un ensemble de dispositifs récepteurs ayant transmis des métadonnées pour le programme vidéo, des moyens d'envoi d'une autorisation de transmission à au moins un dispositif récepteur différent pour chaque valeur de décalage différente reçue, des moyens de réception du flux binaire sous forme de tronçons de la part des dispositifs récepteurs ayant reçu une autorisation de transmission, chaque dispositif récepteur ayant divisé le flux binaire en un ensemble de tronçons successifs en fonction du facteur de compression, et ayant déterminé les tronçons qu'il transmet au dispositif serveur à partir de l'ensemble de tronçons successifs en fonction de la valeur de décalage et d'une valeur d'écart entre tronçons correspondant au facteur de compression, et des moyens de reconstitution du flux binaire en vue de son stockage dans une unité de stockage du dispositif serveur.

Selon un cinquième aspect de la présente invention, la présente invention concerne un système d'enregistrement de programmes vidéo comprenant au moins un dispositif récepteur selon le troisième aspect et un dispositif serveur selon le quatrième aspect.

Selon un sixième aspect de la présente invention, l'invention concerne un produit programme d'ordinateur comportant des instructions pour mettre en oeuvre, par un dispositif, le procédé selon le premier aspect ou le procédé selon le deuxième aspect, lorsque ledit programme est exécuté par un processeur dudit dispositif.

Selon un septième aspect de la présente invention, l'invention concerne des moyens de stockage stockant un programme d'ordinateur comportant des instructions pour mettre en oeuvre, par un dispositif, le procédé selon le premier aspect ou le procédé selon le deuxième aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1A illustre schématiquement un exemple de mise en oeuvre d'un procédé d'enregistrement à distance selon l'invention d'un programme vidéo dans lequel une pluralité de récepteurs collabore pour enregistrer un même programme vidéo sur un serveur distant,
La Fig. 1B illustre schématiquement un premier exemple de mise en oeuvre d'une visualisation d'un programme vidéo sauvegardé sur le serveur distant sur un afficheur connecté à un récepteur,
La Fig. 1C illustre schématiquement un deuxième exemple de mise en oeuvre d'une visualisation d'un programme vidéo sauvegardé sur le serveur distant sur un afficheur connecté à un récepteur,
La Fig. 2A illustre schématiquement un exemple d'architecture matérielle d'un dispositif récepteur apte à mettre en oeuvre le procédé d'enregistrement à distance selon l'invention,
La Fig. 2B illustre schématiquement un exemple d'architecture matérielle d'un dispositif serveur distant apte à mettre en oeuvre le procédé d'enregistrement à distance selon l'invention,
La Fig. 3 représente schématiquement un exemple de procédé d'enregistrement d'un programme vidéo à distance selon l'invention mis en oeuvre par un récepteur,
La Fig. 4 représente schématiquement un procédé mis en oeuvre par un récepteur de détermination d'une sous-partie d'un flux binaire représentatif d'un programme vidéo à envoyer à un serveur distant,
La Fig. 5 représente schématiquement un premier exemple de procédé d'enregistrement d'un programme vidéo à distance selon l'invention mis en oeuvre par un serveur distant,
La Fig. 6 représente schématiquement un deuxième exemple de procédé d'enregistrement d'un programme vidéo à distance selon l'invention mis en oeuvre par un serveur distant,
La Fig. 7 représente schématiquement un exemple de procédé d'effacement de tronçons d'un flux binaire représentatif d'un programme vidéo mis en oeuvre par un récepteur,
La Fig. 8 représente schématiquement un troisième exemple de procédé d'enregistrement d'un programme vidéo à distance selon l'invention mis en oeuvre par un serveur distant,
La Fig. 9 représente schématiquement un exemple d'un procédé mis en oeuvre par un récepteur permettant un affichage sur un dispositif d'affichage connecté à un récepteur d'un programme vidéo enregistré sur un serveur distant,
La Fig. 10 représente schématiquement un exemple d'un procédé mis en oeuvre par un serveur distant permettant un affichage sur un dispositif d'affichage connecté à un récepteur d'un programme vidéo enregistré sur un serveur distant.

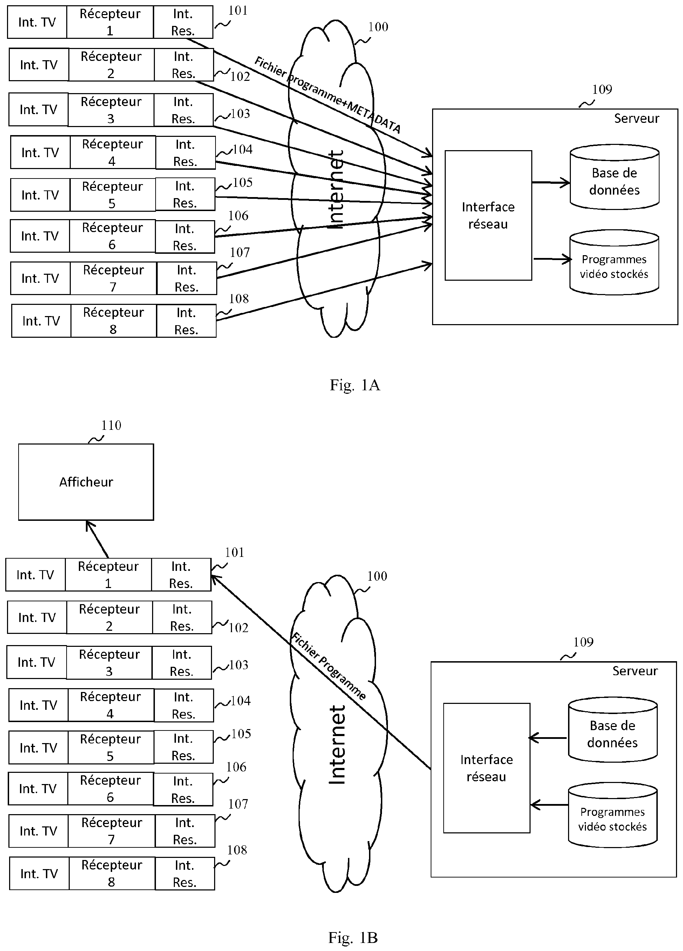

La Fig. 1A illustre schématiquement un exemple de mise en oeuvre d'un procédé d'enregistrement à distance selon l'invention, d'un programme vidéo dans lequel une pluralité de récepteurs collabore pour enregistrer un même programme vidéo sur un serveur distant. Par la suite, nous appelons les récepteurs aptes à mettre en oeuvre l'invention « récepteurs enregistreurs ». La Fig. 1A représente un réseau comprenant une pluralité de récepteurs enregistreurs 101 à 108 connectés à un serveur distant 109 par un réseau de communication 100 tel que le réseau Internet. Un fournisseur de programmes vidéo (non représenté) transmet un ensemble de programmes vidéo aux récepteurs enregistreurs 101 à 108. Chaque récepteur enregistreur 101 à 108 possède une interface de réception de programmes vidéo telle que par exemple, une interface TNT, ADSL, 3G ou 4G. Nous supposons ici que les interfaces de réception de programmes vidéo des récepteurs enregistreurs 101 à 108 sont toutes identiques. De cette manière, les flux binaires reçus par chaque récepteur enregistreur 101 à 108 sont tous identiques, à condition qu'aucune erreur n'affecte ces flux binaires durant leur transmission. Chaque récepteur enregistreur 101 à 108 possède de plus une interface réseau lui permettant de communiquer avec le serveur distant 109 par l'intermédiaire du réseau de communication 100. Nous supposons ici que tous les récepteurs enregistreurs possèdent une interface réseau identique et donc qu'ils possèdent un même débit de réception et un même débit d'émission. Par ailleurs, chaque récepteur enregistreur 101 à 108 possède une unité de stockage telle qu'un disque dur permettant de sauvegarder des flux binaires correspondant à des programmes vidéo.

Le serveur distant 109 possède une interface réseau permettant de communiquer avec les récepteurs enregistreurs 101 à 108 par l'intermédiaire du réseau de communication 100, un moyen de stockage tel qu'un ou plusieurs disques durs permettant de stocker des flux binaires correspondant à des programmes vidéo et une base de données de programmes vidéo comprenant pour chaque flux binaire des données descriptives (ou métadonnées).

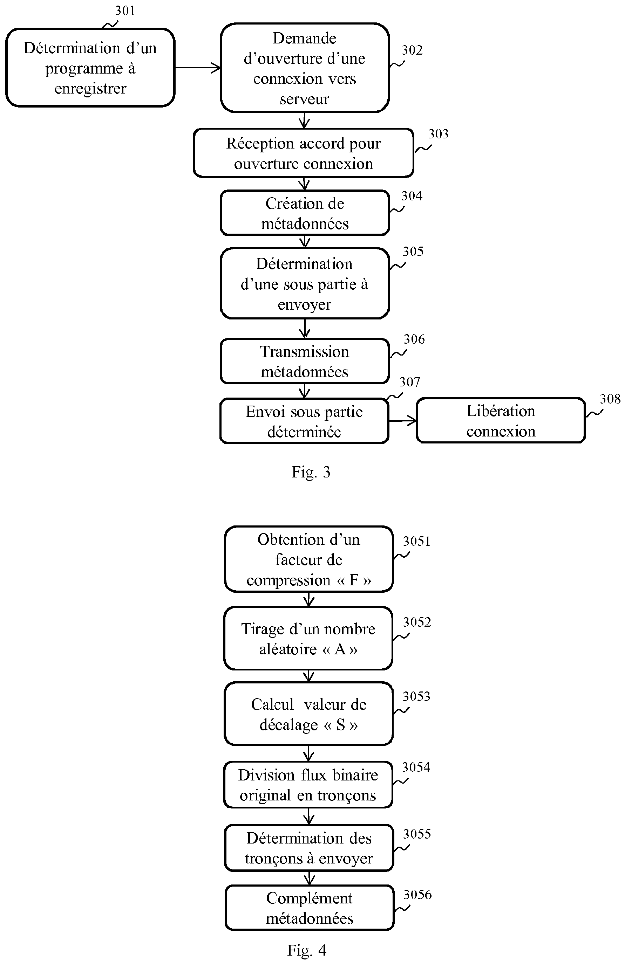

Dans l'exemple de la Fig. 1A, les récepteurs enregistreurs 101 à 108 doivent enregistrer un même programme vidéo sur le serveur distant. Pour ce faire, selon un procédé que nous décrivons par la suite en relation avec la Fig. 3, chaque récepteur enregistreur 101 à 108 transmet des tronçons du flux binaire correspondant au programme vidéo au serveur distant qui procède à une reconstitution du flux binaire. En parallèle à la transmission des tronçons, chaque récepteur enregistreur 101 à 108 transmet des métadonnées décrivant le programme vidéo et les tronçons. Le flux binaire reconstitué est stocké dans l'unité de stockage du serveur distant. Les métadonnées sont stockées dans la base de données de programmes vidéo et associées au flux binaire reconstitué.

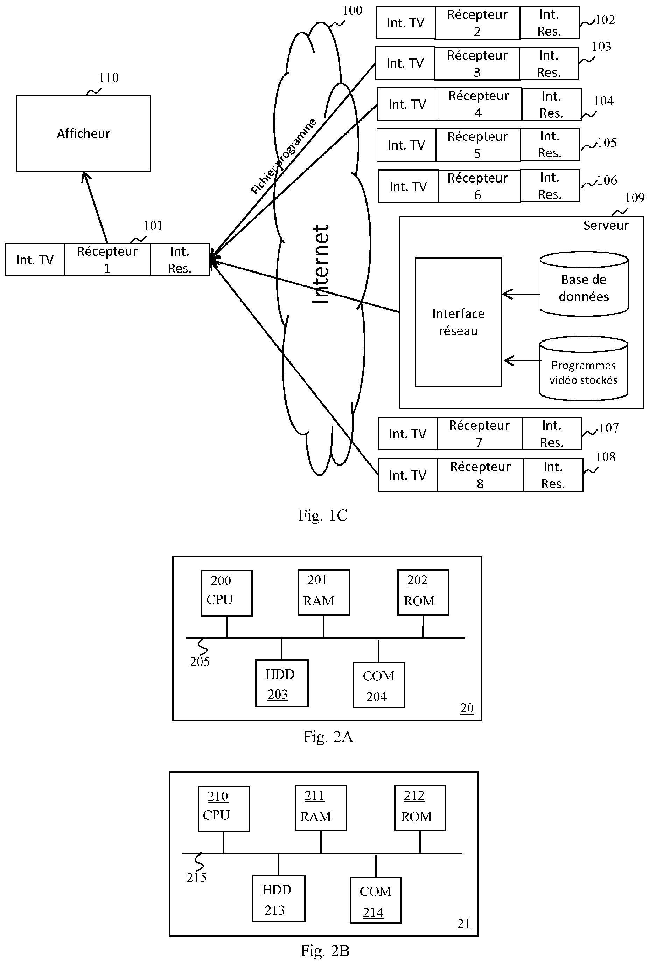

La **Fig. 2A** illustre schématiquement un exemple d'architecture matérielle d'un dispositif récepteur enregistreur (dit « récepteur enregistreur ») 20 apte à mettre en oeuvre le procédé d'enregistrement à distance selon l'invention. Le récepteur enregistreur 20 est identique aux récepteurs enregistreurs 101 à 108. Le récepteur enregistreur 20 comporte, reliés par un bus de communication 205 : un processeur ou CPU (« Central Processing Unit » en anglais) 200; une mémoire vive RAM (« Random Access Memory » en anglais) 201; une mémoire morte ROM (« Read Only Memory » en anglais) 202; une unité de stockage 203 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive » en anglais); au moins une interface 204 permettant d'échanger des données avec d'autres dispositifs. L'unité de stockage du récepteur enregistreur 20 est de taille réduite et ne permet de stocker qu'un nombre limité de flux binaires. Dans un mode de réalisation, l'interface 204 met en oeuvre l'interface de réception de programmes vidéo, l'interface réseau et une interface de communication avec un dispositif client tel qu'un ordinateur, une tablette ou un téléphone intelligent. L'interface 204 peut par exemple comprendre une interface ADSL recevant entre autres des flux binaires correspondant à des programmes vidéo transmis par un fournisseur de programmes vidéo. Par ailleurs, l'interface 204 permet des échanges de données avec le serveur distant 109 et d'autres récepteurs enregistreurs. Un utilisateur peut, de plus, utiliser l'interface 204 pour contrôler le récepteur enregistreur 20 depuis un dispositif client et par exemple sélectionner un programme vidéo à enregistrer.

Le processeur 200 est capable d'exécuter des instructions chargées dans la RAM 201 à partir de la ROM 202, d'une mémoire externe (non représentée), d'un support de stockage, ou d'un réseau de communication. Lorsque le récepteur enregistreur 20 est mis sous tension, le processeur 200 est capable de lire de la RAM 201 des instructions et de les exécuter. Ces instructions forment un programme d'ordinateur causant la mise en oeuvre, par le processeur 200, de tout ou partie des algorithmes et étapes décrits en relation avec le récepteur enregistreur 20 et les Figs. 3, 4, 7 et 9.

La **Fig. 2B** illustre schématiquement un exemple d'architecture matérielle d'un dispositif serveur distant (dit « serveur distant ») 21 apte à mettre en oeuvre le procédé d'enregistrement à distance selon l'invention. Le serveur distant 21 est identique au serveur distant 109. Le serveur distant 21 comporte, reliés par un bus de communication 215 : un processeur ou CPU (« Central Processing Unit » en anglais) 210; une mémoire vive RAM (« Random Access Memory » en anglais) 211; une mémoire morte ROM (« Read Only Memory » en anglais) 212; une unité de stockage 213 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive» en anglais); au moins une interface 214 permettant d'échanger des données avec d'autres dispositifs. L'unité de stockage 213 du serveur distant 21 est de taille importante et permet de stocker un grand nombre de flux binaires et une base de données de programmes vidéo associant des métadonnées à chaque flux binaire enregistré. Dans un mode de réalisation, l'unité de stockage 213 peut être une unité de stockage distante externe au serveur distant 21 et reliée au serveur distant 21 par un réseau de communication. L'interface 214 permet de mettre en oeuvre plusieurs connexions en parallèle et ainsi d'échanger des données avec plusieurs récepteurs enregistreurs simultanément.

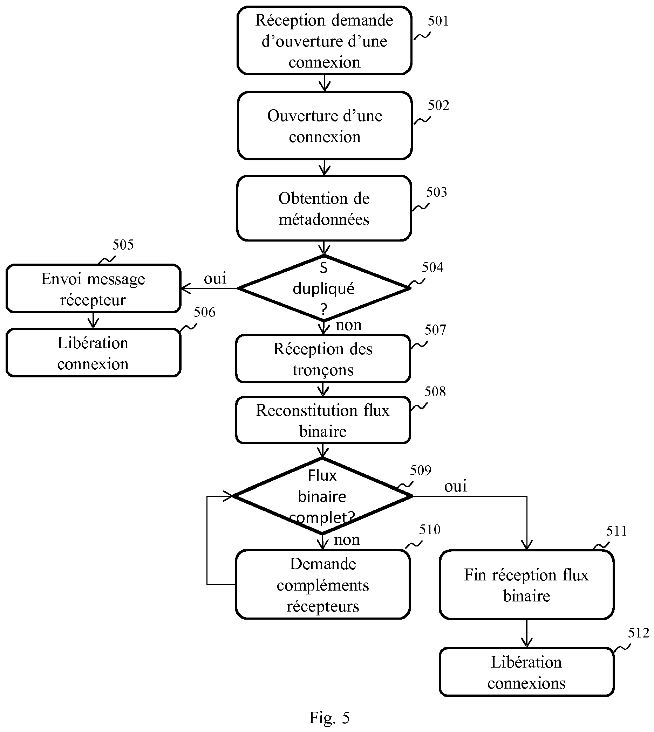

Le processeur 210 est capable d'exécuter des instructions chargées dans la RAM 211 à partir de la ROM 212, d'une mémoire externe (non représentée), d'un support de stockage, ou d'un réseau de communication. Lorsque le serveur distant 21 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits en relation avec le serveur distant 21 et les Figs. 5, 6, 8 et 10.

Tout ou partie des algorithmes et étapes décrits par la suite peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 représente schématiquement un exemple de procédé d'enregistrement à distance d'un programme vidéo selon l'invention, mis en oeuvre par un récepteur enregistreur. Dans cet exemple nous nous focalisons sur le récepteur enregistreur 101 qui met en oeuvre le procédé de la Fig. 3. Toutefois, nous considérons dans cet exemple que les récepteurs enregistreurs 102 à 108 mettent en oeuvre le même procédé simultanément. Le procédé débute par une étape 301 au cours de laquelle un utilisateur sélectionne un programme vidéo à enregistrer sur le serveur distant 109. Dans une étape 302, le récepteur enregistreur 101 envoie une requête au serveur distant demandant l'ouverture d'une connexion. Par exemple, le récepteur enregistreur 101 demande l'ouverture d'une connexion HTTPS (protocole de transfert hypertexte sécurisé, « HyperText Transfer Protocol Secure » en terminologie anglo-saxonne).

Dans une étape 303, le récepteur enregistreur 101 reçoit de la part du serveur distant 109 un accord pour l'ouverture de la connexion. La connexion est alors ouverte.

Dans une étape 304, le récepteur enregistreur 101 crée des métadonnées par exemple dans un format XML (langage de balisage extensible : « Extensible Markup Language » en terminologie anglo-saxonne). Ces métadonnées comprennent une information représentative d'un instant de début du programme vidéo sélectionné, une information représentative d'un instant de fin du programme vidéo sélectionné, une information permettant d'identifier un nom du programme, une information représentative d'un canal de transmission utilisé par le fournisseur de programmes vidéo pour transmettre le programme vidéo aux récepteurs enregistreurs 101 à 108.

Le débit d'émission du récepteur enregistreur 101 étant insuffisant pour permettre la transmission du flux binaire correspondant au programme vidéo choisi au serveur distant 109, le récepteur enregistreur 101 n'envoie qu'une sous-partie de ce flux binaire. Pour ce faire, le récepteur enregistreur 101 détermine lors d'une étape 305 quelle sous-partie du flux binaire envoyer au serveur distant 109 selon un procédé décrit en relation avec la Fig. 4. Un objectif de l'étape 305 est d'éviter que tous les récepteurs enregistreurs ne transmettent la même sous-partie.

Dans une étape 306, le récepteur 101 complète les métadonnées avec des informations représentatives de la sous-partie du flux binaire déterminée au cours de l'étape 305.

Dans une étape 307, le récepteur enregistreur 101 débute une transmission de la sous-partie du flux binaire déterminée lors de l'étape 305 au serveur distant 109.

La transmission se poursuit tant que la sous-partie déterminée n'est pas complètement transmise ou tant que le serveur distant n'a pas demandé l'arrêt de la transmission. Suite à l'étape 307, le récepteur enregistreur 101 met fin à la connexion.

La **Fig. 4** représente schématiquement un procédé, mis en oeuvre par le récepteur enregistreur 101, de détermination d'une sous-partie d'un flux binaire représentatif d'un programme vidéo à envoyer à un serveur distant correspondant à l'étape 305 de la Fig. 3. Le procédé débute par une étape 3051, au cours de laquelle le récepteur enregistreur 101 obtient un facteur de compression *F*. Dans un mode de réalisation, le facteur de compression *F* est calculé par le récepteur enregistreur 101 en divisant le débit d'émission du récepteur enregistreur 101 par un débit d'encodage du programme vidéo. Nous supposons ici qu'un récepteur enregistreur connait le débit d'encodage de chaque programme vidéo qu'il reçoit.

Dans une étape 3052, le récepteur enregistreur 101 procède à un tirage d'un nombre entier positif aléatoire *A* non nul.

Dans une étape 3053, le récepteur enregistreur 101 détermine une valeur de décalage *S* que nous expliquons par la suite. La valeur de décalage *S* est calculée comme un reste d'une division entière du nombre aléatoire *A* par le facteur de compression *F*.

Dans une étape 3054, le récepteur enregistreur 101 divise le flux binaire correspondant au programme vidéo à enregistrer en un ensemble de tronçons successifs, les tronçons de l'ensemble de tronçons successifs étant ordonnés suivant un ordre d'apparition des tronçons dans le flux binaire. Dans un mode de réalisation, le récepteur enregistreur 101 divise le flux binaire en tronçons de taille fixe *TB*, selon une mesure de taille représentative d'un nombre de données binaires *i*.*e*. un nombre de bits. Cette taille est définie arbitrairement et identique sur tous les récepteurs enregistreurs.

Dans une étape 3055, le récepteur enregistreur 101 détermine quels tronçons de l'ensemble de tronçons successifs doivent être envoyés au serveur distant 109. Pour ce faire, les tronçons de l'ensemble de tronçons successifs sont parcourus en suivant leur ordre d'apparition dans le flux binaire. Le récepteur enregistreur 101 associe chaque tronçon à un indice correspondant à la position du tronçon dans l'ensemble de tronçons successifs. Le récepteur enregistreur 101 sélectionne des tronçons de l'ensemble de tronçons successifs espacés d'un nombre de tronçons égal à *F* en parcourant l'ensemble de tronçons successifs à partir du tronçon d'indice *S i.e.* le récepteur enregistreur 101 sélectionne les tronçons d'indice *I=S+F.x* où *x* est un entier positif ou nul tel que *I* est inférieur ou égal à une valeur *N* égale au nombre total de tronçons compris dans le flux binaire. De cette manière, le récepteur enregistreur 101 n'envoie qu'un sous-ensemble de *N*/*F* tronçons de l'ensemble de tronçons successifs.

Dans une étape 3056, le récepteur enregistreur 101 complète les métadonnées en y insérant une information représentative de la taille de chaque tronçon, une information représentative de la valeur de décalage S et si le récepteur enregistreur 101 est à l'origine du calcul du facteur de compression *F*, une valeur représentative du facteur de compression *F*.

Dans un mode de réalisation, le récepteur enregistreur 101 associe à chaque tronçon un fichier de métadonnées comprenant l'indice du tronçon dans l'ensemble de tronçons successifs et l'indice maximum des tronçons. Chaque fichier de métadonnées est envoyé au serveur distant 109 lors de l'envoi du tronçon correspondant.

Lorsque un nombre de récepteurs enregistreurs (ici « 8 ») est égal au facteur de compression *F* et que chaque récepteur enregistreur 101 à 108 a calculé une valeur de décalage *S* différente, les récepteurs enregistreurs agissent de manière complémentaire et tous les tronçons constituant le flux binaire sont transmis au serveur distant 109.

Si des récepteurs enregistreurs parmi les récepteurs enregistreurs 101 à 108 calculent une valeur de décalage *S* identique, le serveur distant 109 empêche certains récepteurs enregistreurs de poursuivre leur transmission de tronçons pour ne garder qu'un récepteur enregistreur ayant calculé ladite valeur de décalage *S*, selon un procédé décrit en relation avec la Fig. 5. Ce cas de figure peut se produire notamment lorsque le nombre de récepteurs enregistreurs est supérieur au facteur de compression *F.*

Si le nombre de récepteurs enregistreurs est inférieur au facteur de compression *F*, il y a un risque pour que le serveur distant 109 ne reçoive pas la totalité des tronçons correspondant au programme vidéo à enregistrer. Dans ce cas, selon un procédé décrit en relation avec la Fig. 5, le serveur distant 109 demandera à des récepteurs enregistreurs de transmettre les tronçons manquants.

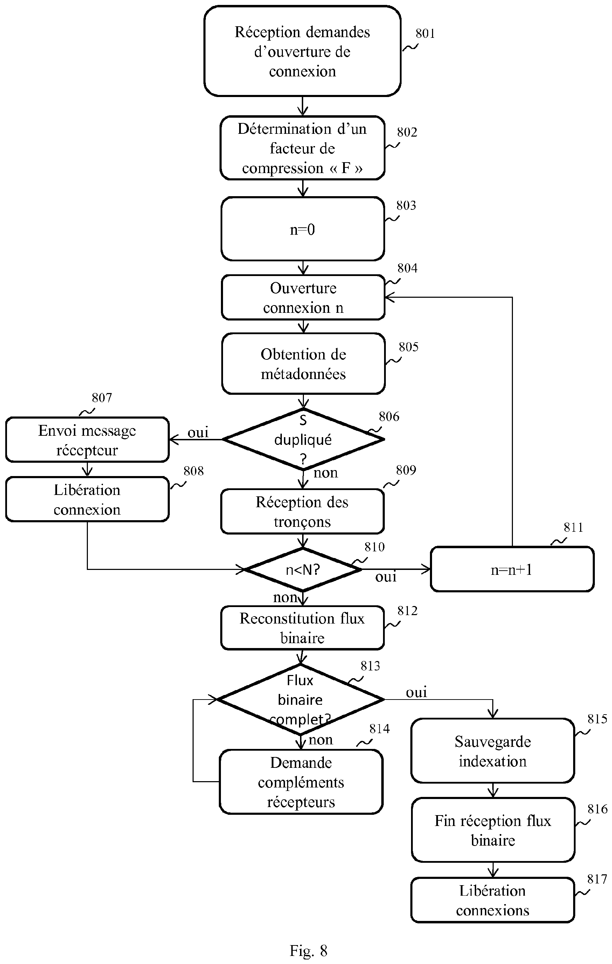

Dans un mode de réalisation, les récepteurs enregistreurs 101 à 108 ne calculent pas le facteur de compression *F*. La détermination du facteur de compression *F* est alors laissée au serveur distant 109 qui transmettra le facteur de compression *F* aux récepteurs enregistreurs 101 à 108. Un exemple de procédé de détermination du facteur de compression *F* par le serveur distant 109 est décrit en relation avec la Fig. 8.

Les fichiers de métadonnées associés à chaque tronçon ont un débit de transmission non négligeable venant s'ajouter à un débit de transmission des tronçons eux-mêmes. Dans un mode de réalisation, pour diminuer le débit de transmission, le récepteur enregistreur 101 n'associe pas chaque tronçon à un fichier de métadonnées. Dans ce mode de réalisation, nous verrons par la suite que le serveur distant 109 doit analyser chaque tronçon pour déterminer dans quel ordre reconstituer le flux binaire.

Dans un mode de réalisation, au moins un récepteur enregistreur parmi les récepteurs enregistreurs 101 à 108, par exemple le récepteur enregistreur 101, sauvegarde dans son unité de stockage 203 des tronçons de l'ensemble de tronçons successifs ou des tronçons du sous-ensemble de N/F tronçons de l'ensemble de tronçons successifs. Ces tronçons peuvent par exemple être conservés temporairement pour mettre en oeuvre un service de décalage dans le temps (« time-shifting » en terminologie anglo-saxonne).

Dans un mode de réalisation, le récepteur enregistreur 101 ayant sauvegardé des tronçons dans son unité de stockage 203 met en oeuvre une politique locale d'effacement des tronçons sauvegardés, par exemple en effaçant les tronçons les plus anciens.

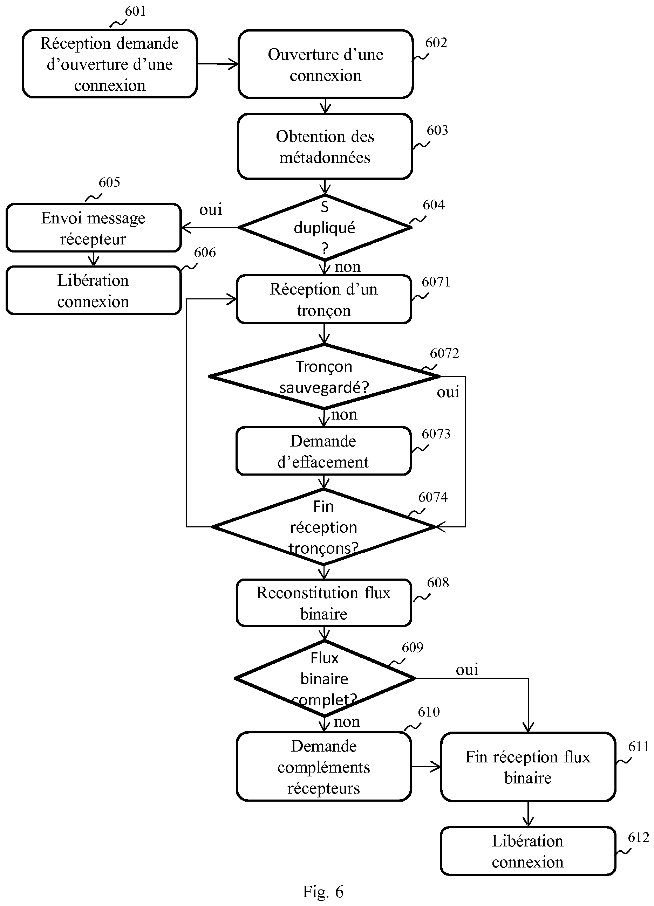

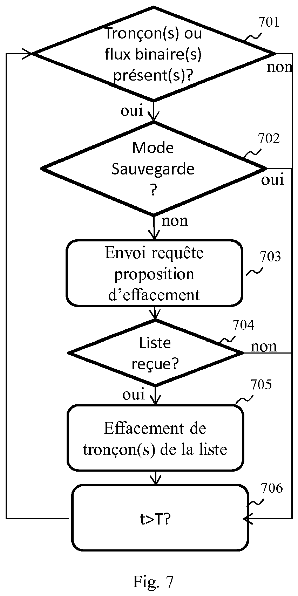

Dans un mode de réalisation, le récepteur enregistreur 101 collabore avec le serveur distant 109 pour déterminer quels tronçons sauvegardés dans son unité de stockage peuvent être effacés selon des procédés décrits en relation avec les Figs. 6 et 7.

Dans un mode de réalisation, le récepteur enregistreur 101 divise le flux binaire en tronçons de taille fixe *TD,* selon une mesure de taille représentative d'une durée. Cette taille est définie arbitrairement et identique sur tous les récepteurs enregistreurs. Ce mode de réalisation nécessite une analyse du flux binaire correspondant au programme vidéo à sauvegarder pour retrouver des images comprises dans le flux binaire. L'analyse du flux binaire peut se baser par exemple sur une recherche des marqueurs temporels (« timestamp » en terminologie anglo-saxonne) dans le flux binaire, tels que des marqueurs temporels de présentation (« Présentation timestamp (PTS)» en terminologie anglo saxonne) ou les marqueurs temporels de décodage (« decoding timestamp (DTS)» en terminologie anglo saxonne) présents dans le format d'encapsulation MPEG-TS. Chaque image dans un flux binaire est associée à un marqueur PTS et un marqueur DTS indiquant respectivement un instant de présentation de l'image et un instant de décodage de l'image. Dans un mode de réalisation, la division du flux binaire en tronçons consiste à découper le flux binaire en tronçons successifs de durée *TD* en se basant sur les marqueurs PTS associés aux images.

Dans un mode de réalisation, un récepteur enregistreur peut enregistrer plusieurs programmes vidéo simultanément. Le facteur de compression *F* doit alors être adapté au nombre de programmes à enregistrer. Par exemple, si plusieurs programmes sont enregistrés simultanément, le facteur de compression *F* est le résultat d'une division du débit d'émission du récepteur enregistreur 101 par une somme des débits d'encodage de chaque programme vidéo à enregistrer.

La **Fig. 5** représente schématiquement un premier exemple de procédé d'enregistrement à distance d'un programme vidéo mis en oeuvre par le serveur distant 109. Dans une étape 501, le serveur distant 109 reçoit une demande de connexion de la part d'un des récepteurs enregistreurs 101 à 108, par exemple le récepteur enregistreur 101. Dans une étape 502, le serveur distant 109 autorise la connexion avec le récepteur enregistreur 101.

Dans une étape 503, le serveur distant 109 reçoit les métadonnées transmises par le récepteur enregistreur 101 lors de l'étape 306. Le serveur distant 109 obtient alors une description du programme vidéo et notamment l'information représentative de l'instant de début du programme vidéo, l'information représentative de l'instant de fin du programme vidéo, et la valeur de décalage *S* calculée par le récepteur enregistreur 101. S'il ne l'a pas déjà calculé à partir de métadonnées reçues d'un autre récepteur enregistreur devant enregistrer le même programme vidéo, le serveur distant 109 calcule une durée *D* du programme vidéo à partir de l'information représentative de l'instant de début du programme vidéo et de l'information représentative de l'instant de fin du programme vidéo.

Lors d'une étape 504, le serveur distant 109 compare la valeur de décalage S reçue avec d'autres valeurs de décalage *S* éventuellement reçues de la part d'autres récepteurs enregistreurs (102 à 108) devant enregistrer le même programme vidéo. S'il s'avère qu'un récepteur enregistreur parmi les récepteurs enregistreurs 102 à 108 a déjà envoyé la même valeur de décalage *S*, le serveur distant 109 envoie un message au récepteur enregistreur 101 lui indiquant de cesser la transmission de ses tronçons lors d'une étape 505 et libère la connexion ouverte lors de l'étape 502 dans une étape 506. Tous les tronçons déjà envoyés par le récepteur enregistreur 101 sont rejetés par le serveur distant 109.

Si aucun autre récepteur enregistreur n'a transmis la valeur de décalage *S*, le serveur distant 109 met en oeuvre une étape 507. Au cours de l'étape 507, le serveur distant 109 reçoit les tronçons transmis pas le récepteur enregistreur 101.

Dans une étape 508, le serveur distant 109 commence à reconstituer le flux binaire correspondant au programme vidéo. Pour ce faire l'ensemble des tronçons reçus pour le programme vidéo de la part des récepteurs enregistreurs 101 à 109 sont mis bout à bout pour former un fichier. Dans un mode de réalisation, le serveur distant 109 ordonne les tronçons en utilisant le fichier de métadonnées associé à chaque tronçon et comprenant l'indice du tronçon. Par ailleurs, lors de l'étape 508, le serveur distant 109 sauvegarde les métadonnées décrivant le programme vidéo dans sa base de données de programmes vidéo et pour chaque tronçon une information permettant d'identifier quel récepteur enregistreur a transmis le tronçon.

Dans une étape 509, le serveur distant 109 vérifie que tous les tronçons ont été reçus. Pour cela le serveur distant 109 vérifie que tous les indices depuis l'indice « 1 » jusqu'à l'indice maximum des tronçons ont bien été reçus. Si c'est le cas, le serveur distant 109 déclare que le flux binaire correspondant aux programmes vidéo a été reconstitué lors d'une étape 511 et libère chaque connexion le reliant aux récepteurs enregistreurs 101 à 108 lors d'une étape 512.

S'il s'avère que des indices manquent, le serveur distant 109 demande à au moins un des récepteurs enregistreurs 101 à 108 de transmettre les tronçons correspondant aux indices manquants lors d'une étape 510. L'étape 510 est suivie de l'étape 509 déjà expliquée.

La demande de retransmission des tronçons correspondant aux indices manquants peut se faire de différentes manières.

Dans un mode de réalisation, le serveur distant 109 envoie une liste d'indices manquants à un des récepteurs enregistreurs 101 à 109 qui transmet les tronçons correspondants.

Dans un autre mode de réalisation, sachant que le serveur distant 109 doit recevoir *F* valeurs de décalage différentes pour pouvoir reconstituer le flux binaire correspondant au programme vidéo, si moins de *F* valeurs différentes ont été reçues, le serveur distant 109 détermine quelle(s) valeur(s) de décalage *S* manque(nt). Les valeurs de décalage *S* manquantes sont transmises à au moins un récepteur enregistreur parmi les récepteurs enregistreurs 101 à 108 pour qu'il(s) puisse(nt) déterminer quels tronçons doivent être envoyés. Il est moins coûteux en termes de débit de transmettre une ou plusieurs valeurs de décalage que de transmettre une liste d'indices de tronçons.

La **Fig. 6** représente schématiquement un deuxième exemple de procédé d'enregistrement d'un programme vidéo à distance mis en oeuvre par le serveur distant 109. Le procédé décrit en relation avec la Fig. 6 complète le procédé décrit en relation avec la Fig. 5 en ajoutant des étapes mettant en oeuvre une politique d'effacement de tronçons sauvegardés dans l'unité de stockage 203 du récepteur enregistreur 101. Ce procédé comprend des étapes 601 à 606 et 608 à 612 respectivement identiques aux étapes 501 à 506 et 508 à 512. L'étape 507 est remplacée par des étapes 6071, 6072, 6073 et 6074. Dans ce procédé, on suppose que les métadonnées reçues lors de l'étape 603 comprennent une information indiquant si des tronçons sont sauvegardés dans l'unité de stockage 203 du récepteur enregistreur 101 et si c'est le cas, quels tronçons sont sauvegardés. Ces métadonnées sont stockées dans la base de données de programmes vidéo du serveur distant 109. Par exemple, le fichier de métadonnées associé à chaque tronçon contient une information indiquant si le tronçon est sauvegardé ou pas par le récepteur enregistreur ayant envoyé ce tronçon.

Lors de l'étape 6071, le serveur distant 109 reçoit un tronçon. Dans une étape 6072, le serveur distant 109 détermine en consultant le fichier associé au tronçon si ce tronçon est sauvegardé dans l'unité de stockage 203 du récepteur enregistreur 101. Si ce n'est pas le cas, le serveur distant 109 détermine lors de l'étape 6074 si il a reçu tous les tronçons que doit envoyer le récepteur enregistreur 101. Si tous les tronçons devant être envoyés par le récepteur enregistreur 101 ont été reçus, le serveur distant 109 met en oeuvre l'étape 608. Sinon, le récepteur enregistreur 101 se met en attente d'un nouveau tronçon et retourne à l'étape 6071 lorsqu'un nouveau tronçon est reçu.

Si lors de l'étape 6072, le serveur distant 109 détermine que le tronçon a été sauvegardé par le récepteur enregistreur 101, le serveur distant 109 envoie, lors de l'étape 6073, une demande d'effacement du tronçon concerné au récepteur enregistreur 101 pour provoquer l'effacement du tronçon concerné de l'unité de stockage 203 du récepteur enregistreur 101. Le serveur distant 109 met ensuite en oeuvre l'étape 6074.

La **Fig. 7** représente schématiquement un exemple de procédé d'effacement de tronçons d'un flux binaire représentatif d'un programme vidéo mis en oeuvre par au moins un des récepteurs enregistreurs 101 à 108, par exemple le récepteur enregistreur 101. Le procédé de la Fig. 7 est une alternative au procédé d'effacement décrit en relation avec la Fig. 6. Le procédé de la Fig. 7 est compatible avec le procédé décrit en relation avec la Fig. 5 et peut être mis en oeuvre à tout moment par le récepteur enregistreur 101 après avoir démarré l'envoi des tronçons au serveur distant 109. Le récepteur enregistreur 101 peut par exemple mettre en oeuvre le procédé de la Fig. 7 après l'enregistrement du flux binaire correspondant au programme vidéo sur le serveur distant 109. Par ailleurs, comme dans le procédé de la Fig. 6, on suppose que les métadonnées reçues lors de l'étape 503 comprennent une information indiquant pour chaque tronçon si ce tronçon est sauvegardé dans l'unité de stockage 203 du récepteur enregistreur 101. Ces métadonnées ont été préalablement stockées dans la base de données de programmes vidéo du serveur distant 109 lors de la réception des tronçons.

Dans une étape 701, le récepteur enregistreur 101 vérifie si des tronçons sont stockés dans son unité de stockage 203. Si aucun tronçon n'est stocké dans l'unité de stockage 203, le récepteur enregistreur 101 se met en attente pendant une durée T dans une étape 706. L'étape 706 permet de vérifier périodiquement avec une période T si des tronçons peuvent être effacés de l'unité de stockage 203.

Si des tronçons sont présents dans l'unité de stockage 203, le récepteur enregistreur 101 vérifie s'il est dans un mode de sauvegarde ou pas lors d'une étape 702. Le mode de sauvegarde est un mode de fonctionnement du récepteur enregistreur 101 dans lequel le récepteur enregistreur 101 s'oblige à conserver des tronçons de l'ensemble de tronçons successifs ou des tronçons du sous-ensemble de tronçons de l'ensemble de tronçons successifs. Dans ce mode, les tronçons stockés dans l'unité de stockage 203 ne peuvent pas être effacés. Le mode sauvegarde peut être activé par exemple par un utilisateur à l'aide d'un dispositif client connecté au récepteur enregistreur 101. Si le récepteur enregistreur 101 est dans le mode sauvegarde, le récepteur enregistreur met en oeuvre l'étape 706.

Si le récepteur enregistreur n'est pas dans le mode sauvegarde, dans une étape 703, le récepteur enregistreur 101 envoie une demande d'autorisation d'effacement au serveur distant 109. Si le récepteur enregistreur 101 ne reçoit aucune réponse à sa demande après un délai prédéfini inférieur à *T,* le récepteur enregistreur 101 met en oeuvre l'étape 706. Si par contre le récepteur enregistreur 101 reçoit une réponse à sa demande d'effacement, le récepteur enregistreur 101 efface lors d'une étape 705 des tronçons identifiés dans une liste de tronçons transmise par le récepteur enregistreur 101 dans la réponse. Le récepteur enregistreur 101 met ensuite en oeuvre l'étape 706.

De son côté, le serveur distant 109 peut recevoir une demande d'autorisation d'effacement de la part d'un des récepteurs enregistreurs 101 à 109 à tout moment après le début de l'enregistrement du flux binaire correspondant au programme à enregistrer. Lorsqu'il reçoit cette demande, il détermine quel(s) tronçon(s) peut (peuvent) être effacé(s). Par exemple, lorsque la demande d'effacement émane du récepteur enregistreur 101, le serveur distant 109 utilise la base de données de programmes vidéo pour identifier les tronçons envoyés par le récepteur enregistreur 101, et parmi ces tronçons, les tronçons sauvegardés dans l'unité de stockage 203 du récepteur enregistreur 101. Puis selon un critère prédéfini, le serveur distant 109 détermine quels tronçons peuvent être supprimés. Le critère prédéfini peut par exemple être un critère de temps. Le serveur distant 109 peut ainsi envoyer une liste de tronçons correspondant aux tronçons les plus anciens.

Dans un mode de réalisation, le critère prédéfini est un critère de redondance de sauvegarde des tronçons. Dans ce mode de réalisation, plusieurs récepteurs enregistreurs parmi les récepteurs enregistreurs 101 à 108 peuvent stocker des tronçons identiques. Par exemple, lorsque la demande d'effacement émane du récepteur enregistreur 101, le serveur distant 109 utilise la base de données de programmes vidéo pour identifier les tronçons envoyés par le récepteur enregistreur 101, et parmi ces tronçons, les tronçons sauvegardés dans l'unité de stockage 203 du récepteur enregistreur 101 qui sont aussi sauvegardés dans l'unité de stockage 203 d'au moins un autre récepteur enregistreur parmi les récepteurs enregistreurs 102 à 108. Le serveur distant 109 peut alors envoyer une liste de tronçons à effacer au récepteur enregistreur 101 correspondant à des tronçons stockés dans l'unité de stockage 203 d'au moins un autre récepteur enregistreur parmi les récepteurs enregistreurs 102 à 108.

La **Fig. 8** représente schématiquement un troisième exemple de procédé d'enregistrement à distance d'un programme vidéo selon l'invention mis en oeuvre par le serveur distant 109. Dans le procédé de la Fig. 8, c'est le serveur distant 109 qui détermine le facteur de compression *F*. Dans une étape 801, le serveur distant 109 reçoit des demandes d'ouverture de connexion. On suppose que pour la mise en oeuvre du procédé de la Fig 8, lors de l'envoi d'une demande d'ouverture de connexion au cours de l'étape 302, chaque récepteur enregistreur transmet au serveur distant 109 une information représentative du programme vidéo devant être enregistré. Lors de l'étape 801, le serveur distant 109 attend un délai prédéfini *D* avant de poursuivre le procédé afin d'obtenir des demandes de connexion pour un même programme vidéo de la part d'un maximum de récepteurs enregistreurs. Le délai prédéfini *D* est un délai déterminé par exemple lors de demandes d'enregistrement de programmes vidéo passées. Ce délai prédéfini *D* permet d'assurer que toutes les demandes de connexion qui pourraient être formulées par des récepteurs enregistreurs pour enregistrer un même programme vidéo seraient reçues par le serveur distant 109 avant que le serveur distant 109 détermine le facteur de compression *F*. Chaque demande de connexion correspondant à un récepteur enregistreur devant enregistrer un programme vidéo, en comptant le nombre de demandes de connexion, le serveur distant 109 peut déterminer un nombre total *Nmax* de récepteurs enregistreurs devant enregistrer le même programme. Une connaissance préalable d'un nombre *Nmax* de récepteurs enregistreurs devant enregistrer un même programme vidéo, permet de déterminer un facteur de compression *F* adapté au nombre *Nmax* de récepteurs enregistreurs devant enregistrer un même programme vidéo et ainsi de mieux répartir l'envoi de tronçons entre les récepteurs enregistreurs. De cette manière les tronçons peuvent être transmis avec un débit de transmission inférieur au débit d'émission des récepteurs enregistreurs.

Dans une étape 802, le serveur distant 109 détermine un facteur de compression *F.* On suppose ici que le serveur distant 109 connait un débit moyen d'un programme vidéo *DV* et le débit d'émission des récepteurs enregistreurs *DR*. Le serveur distant 109 choisit alors un facteur de compression *F* compris entre *DV*/*DR* et *Nmax.* Toutefois si *Nmax* est supérieur à un nombre MAX_C de connexions admises par le serveur distant 109, le serveur distant 109 choisit un facteur de compression compris entre *DV*/*DR* et *MAX_C*. Par ailleurs lors de l'étape 802, le serveur distant 109 choisit un nombre *N* de récepteurs enregistreurs parmi les *Nmax* récepteurs enregistreurs devant enregistrer le même programme vidéo, le nombre *N* étant inférieur ou égal à *MAX_C.* Dans un mode de réalisation *N=F.*

Dans une étape 803, le serveur distant 109 initialise une variable *n* à « 0 ». La variable *n* sert à parcourir les *N* récepteurs enregistreurs choisis. Dans une étape 804, le serveur distant 109 ouvre une connexion avec le *n*-ieme des *N* récepteurs enregistreurs. Lors d'une étape 805, le serveur distant 109 reçoit des métadonnées pour le *n*-ieme des *N* récepteurs enregistreurs. L'étape 805 est identique à l'étape 503.

Dans une étape 806, le serveur distant 109 détermine si la valeur de décalage *S* reçue dans les métadonnées est déjà utilisée par un autre récepteur enregistreur. L'étape 806 est identique à l'étape 504. Si la valeur de décalage *S* est déjà utilisée, l'étape 806 est suivie d'une étape 807 et d'une étape 808 respectivement identiques aux étapes 505 et 506.

L'étape 808 est suivie d'une étape 810 au cours de laquelle le serveur distant 109 teste si une connexion a été ouverte pour les *N* récepteurs enregistreurs. Si ce n'est pas le cas, la variable *n* est incrémentée d'une unité lors d'une étape 811 et le serveur distant 109 met de nouveau en oeuvre l'étape 804.

Si la valeur de décalage *S* n'est pas déjà utilisée, lors d'une étape 809 identique à l'étape 507, le serveur distant 109 reçoit des tronçons de la part du récepteur enregistreur concerné par la *n*-ième connexion. L'étape 809 est suivie de l'étape 810.

Lorsque les N connexions ont été ouvertes et que les tronçons correspondant à ces connexions ont été reçus, le serveur distant 109 procède, lors d'une étape 812, à la reconstitution du flux binaire correspondant au programme vidéo. Dans l'exemple de procédé décrit en relation avec la Fig. 8, nous supposons que les tronçons ont été transmis sans fichier de métadonnées indiquant la position des tronçons dans le flux binaire. De plus, nous supposons que les tronçons sont de taille fixe *TD,* selon la mesure de taille correspondant à une durée. Dans ce cas, le serveur distant 109 doit procéder à une analyse de chaque tronçon pour reconstituer le flux binaire. Comme lors de la division du flux binaire en tronçons basée sur la taille fixe *TD,* la reconstitution peut se baser sur la recherche des marqueurs PTS dans les tronçons. Les tronçons sont alors ordonnés en fonction des marqueurs PTS qu'ils contiennent et assemblés pour reconstituer le flux binaire.

Dans une étape 813, le serveur distant 109 détermine si le flux binaire est complet. Pour ce faire, le serveur distant 109 calcule la durée du programme vidéo en utilisant l'information représentative de l'instant de début du programme vidéo sélectionné et l'information représentative de l'instant de fin du programme vidéo sélectionné, puis parcourt l'ensemble des tronçons reçus pour déterminer, à l'aide des PTS, si cette durée est couverte en continu par les tronçons.

Si l'ensemble des tronçons a été reçu, lors d'une étape 815, le serveur distant 109 stocke dans sa base de données de programmes vidéo, pour chaque tronçon, une information représentative d'une période couverte par le tronçon dans le programme vidéo, comme par exemple, un instant de début du tronçon et un instant de fin. Par ailleurs, lors de l'étape 815, le serveur distant 109 enregistre le flux binaire reconstitué dans son unité de stockage 213.

Dans une étape 816, le serveur distant 109 constate que le flux binaire est entièrement sauvegardé et que toutes les métadonnées concernant le programme vidéo ont été sauvegardées dans la base de données. Dans une étape 817, les connexions ouvertes lors de l'étape 804 sont libérées par le serveur distant 109.

S'il s'avère que des tronçons sont manquants lors de l'étape 813, le serveur distant 109 fait, lors d'une étape 814, des demandes pour les tronçons manquants par exemple, en transmettant à au moins un des récepteurs enregistreurs 101 à 108, une information représentative des périodes de temps dans le programme vidéo non couvertes par les tronçons reçus.

Jusque-là nous avons considéré que les flux binaires correspondant à des programmes vidéo reçus par les récepteurs enregistreurs étaient reçus sans erreurs. Il est toutefois courant que des erreurs se produisent durant la transmission de ces flux binaires entre le fournisseur de programmes vidéo et les récepteurs enregistreurs. Deux types d'erreurs peuvent se produire dans un flux binaire. Les erreurs peuvent se traduire par des pertes de portions du flux binaire ou par la réception de portions de flux binaire comportant des inversions de bits. Lors de la division du flux binaire en tronçons, un récepteur enregistreur ayant reçu un flux binaire entaché d'erreurs, risque de créer des tronçons comportant des erreurs.

Dans un mode de réalisation, chaque récepteur enregistreur est apte à détecter des erreurs dans un flux binaire qu'il reçoit. Par exemple, chaque portion de flux binaire reçue par un récepteur enregistreur est associée avec un code de vérification (« checksum » en terminologie anglo-saxonne) permettant de déterminer si la portion est erronée. Dans ce cas, le récepteur enregistreur crée des tronçons uniquement pour les portions de flux binaire reçues ne comportant pas d'erreurs. Comme nous l'avons vu par exemple avec les étapes 813 et 814, le serveur distant 109 est apte à détecter des tronçons manquants et à demander des compléments.

Dans un mode de réalisation, les récepteurs enregistreurs ne sont pas capables de détecter des erreurs. Dans ce mode de réalisation, le serveur distant 109 est apte à détecter des erreurs dans les tronçons reçus. On suppose dans ce mode de réalisation que chaque tronçon correspond à un nombre entier d'images et que chaque image est décomposée en un nombre de macro-blocs (« macroblock » en terminologie anglo-saxonne) ou de CTB (arbre de codage de blocs: « Coding Tree Block » en terminologie anglo-saxonne) fixe connu par le serveur distant 109. On peut remarquer que le terme macro-bloc (resp. le terme CTB) est une terminologie employée dans le standard H.264/AVC (resp. le standard H.265/HEVC) correspondant à un bloc de pixels carré ou rectangulaire d'une image. Pour chaque image reçue dans un tronçon, le serveur distant 109 compte un nombre de macro-blocs ou de CTB décodés. Lorsque le nombre de macro-blocs ou de CTB décodés est différent du nombre de macro-blocs ou de CTB fixe, le serveur distant 109 déclare que le tronçon comporte une erreur. Chaque tronçon reçu comportant des erreurs est alors rejeté par le serveur distant 109 et redemandé à un récepteur enregistreur.

Dans un mode de réalisation, le serveur distant 109 peut créer de la redondance dans les tronçons reçus pour éviter d'avoir à redemander des tronçons erronés. Dans ce mode de réalisation, le serveur distant 109 autorise plus de récepteurs enregistreurs à transmettre des tronçons que nécessaire en choisissant lors de l'étape 802 *N>F* récepteurs enregistreurs parmi les *Nmax* récepteurs enregistreurs devant enregistrer le même programme vidéo. Dans un mode de réalisation *N* = *2.F.* De cette manière certains récepteurs enregistreurs utilisent une même valeur de décalage *S* et envoie des tronçons identiques. Le serveur distant 109, lorsqu'il reçoit des tronçons identiques recherche parmi les tronçons reçus, un tronçon sans erreur. Dès qu'un tronçon sans erreur est trouvé, seul ce tronçon est conservé par le serveur distant 109, les tronçons identiques à ce tronçon sont rejetés.

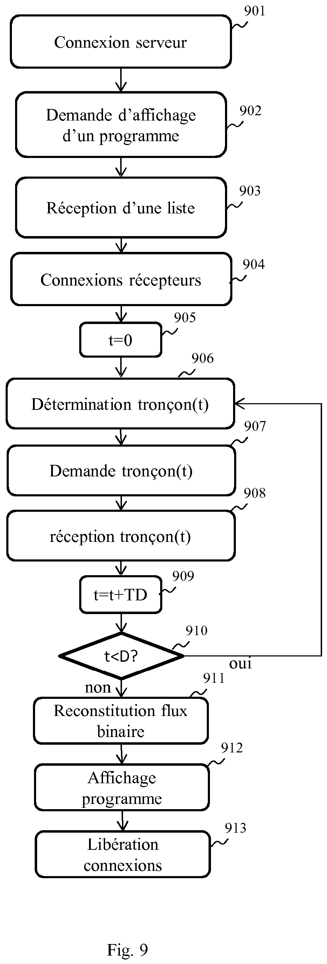

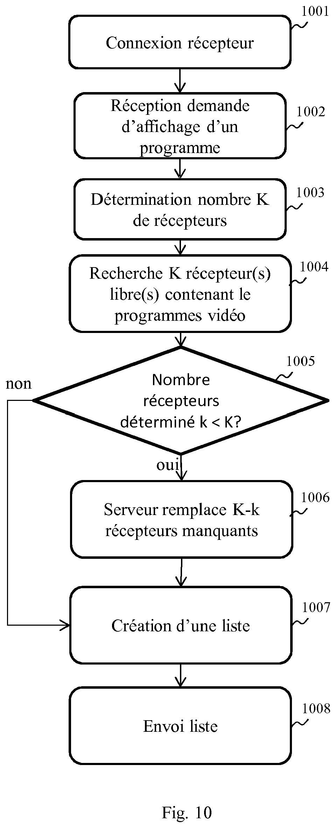

Un objectif d'un enregistrement d'un programme vidéo est de pouvoir visualiser le programme vidéo plus tard. La **Fig. 1B** illustre schématiquement un premier exemple de mise en oeuvre d'une visualisation d'un programme vidéo sauvegardé sur le serveur distant 109 sur un afficheur 110 connecté au récepteur enregistreur 101. Dans cet exemple, le récepteur enregistreur 101 a fait une demande de visualisation d'un programme vidéo au serveur distant 109. En réponse, selon des procédés décrits en relation avec les Figs. 9 et 10, le serveur distant 109 transmet une liste contenant pour chaque tronçon du flux binaire correspondant au programme vidéo, une information indiquant au récepteur enregistreur 101 à qui demander le tronçon parmi les récepteurs enregistreurs 102 à 108 et le serveur distant 109. Dans cet exemple, seul le serveur distant 109 possède les tronçons. Le récepteur enregistreur 101 reçoit donc tous les tronçons de la part du serveur distant 109.

La **Fig. 1C** illustre schématiquement un deuxième exemple de mise en oeuvre d'une visualisation d'un programme vidéo sauvegardé sur le serveur distant 109 sur l'afficheur 110 connecté au récepteur enregistreur 101. Dans ce second exemple, les récepteurs enregistreurs 103, 104 et 108 ont conservé des tronçons du flux binaire correspondant au programme vidéo à visualiser. Le serveur distant 109 indique donc au récepteur enregistreur 101 quels tronçons peuvent être obtenus de la part des récepteurs enregistreurs 103, 104 et 108. Les tronçons manquants qui n'ont pas été conservés par les récepteurs enregistreurs 103, 104 et 108 sont obtenus de la part du serveur distant 109. Le récepteur enregistreur 101 reçoit donc l'ensemble des tronçons de la part des récepteurs enregistreurs 103, 104 et 108 et du serveur distant 109, ce qui permet de ne pas surcharger le serveur distant 109.

La **Fig. 9** représente schématiquement un exemple d'un procédé mis en oeuvre par un récepteur enregistreur, par exemple le récepteur enregistreur 101, permettant un affichage sur le dispositif d'affichage 110 connecté au récepteur enregistreur 101 d'un programme vidéo enregistré sur le serveur distant 109. On suppose pour le procédé de la Fig. 9, mais aussi pour le procédé de la Fig. 10, que certains récepteurs enregistreurs parmi les récepteurs enregistreurs 102 à 108 ont conservé des tronçons dans leur unité de stockage 203 et que le serveur distant 109 a conservé dans sa base de données pour chaque tronçon une information indiquant qui parmi les récepteurs enregistreurs 101 à 108 et le serveur distant 109 possède le tronçon. Dans un mode de réalisation, le serveur distant 109 possède systématiquement tous les tronçons.

Dans une étape 901, le récepteur enregistreur 101 ouvre une connexion avec le serveur distant 109. Dans une étape 902, le récepteur enregistreur 101 demande l'affichage d'un programme vidéo au serveur distant 109. Dans une étape 903, le récepteur enregistreur 101 reçoit une liste indiquant pour chaque tronçon du flux binaire correspondant au programme vidéo à afficher, une information indiquant à quelle période du programme vidéo le tronçon correspond ou l'indice du tronçon et une information indiquant où trouver le tronçon.

Dans une étape 904, si la liste reçue par le récepteur enregistreur 101 indique que certains tronçons devront être demandés à au moins un autre récepteur enregistreur parmi les récepteurs enregistreurs 102 à 108, par exemple le récepteur enregistreur 102, le récepteur enregistreur 101 ouvre une connexion avec au moins un autre récepteur enregistreur, ici le récepteur enregistreur 102.

Dans une étape 905, le récepteur enregistreur 101 démarre une horloge en fixant une variable *t* représentative du temps à 0. La variable *t* représente un instant dans le programme vidéo.

Dans une étape 906, le récepteur enregistreur 101 détermine qui possède le tronçon correspondant à l'instant *t* en utilisant la liste reçue lors de l'étape 903. Lors d'une étape 904, le récepteur enregistreur 101 envoie une demande pour le tronçon correspondant à l'instant *t* au récepteur enregistreur 102 ou au serveur distant 109 en fonction du résultat de l'étape 906. Lors d'une étape 908, le récepteur enregistreur 101 reçoit le tronçon demandé.

Lors d'une étape 909, le récepteur enregistreur 101 passe au tronçon suivant en augmentant la valeur de l'instant *t* de la valeur de la taille d'un tronçon *TD.* Si l'instant *t* n'a pas atteint la durée *D* du programme vidéo lors d'une étape 910, le récepteur enregistreur 101 retourne à l'étape 907.

Si l'instant *t* est supérieur à la durée *D* du programme, le récepteur enregistreur 101 passe à la reconstruction du flux binaire lors d'une étape 911 et affiche le programme vidéo lors d'une étape 912.

Lors d'une étape 913 qui peut suivre l'étape 912 ou être mise en oeuvre pendant les étapes 911 et 912, le récepteur enregistreur 101 libère la (ou les) connexion(s) ouverte(s) lors de l'étape 901 (et l'étape 904).

La **Fig. 10** représente schématiquement un exemple d'un procédé mis en oeuvre par le serveur distant 109 permettant un affichage sur le dispositif d'affichage 110 connecté au récepteur enregistreur 101 d'un programme vidéo enregistré sur le serveur distant 109.

Dans une étape 1001, le serveur distant 109 ouvre une connexion avec un récepteur enregistreur, par exemple le récepteur enregistreur 101. Dans une étape 1002, le serveur distant 109 reçoit une demande d'affichage d'un programme. Pour ce faire, le récepteur enregistreur 101 a transmis une information représentative du programme à afficher au serveur distant 109.

Dans une étape 1003, le serveur distant 109 détermine un nombre *K* de récepteurs enregistreurs à utiliser pour transmettre les tronçons au récepteur enregistreur 101. Le choix du nombre *K* de récepteurs enregistreurs peut se baser sur un critère de répartition de charge de transmission entre les récepteurs enregistreurs. L'objectif est de ne pas monopoliser une intégralité du débit d'émission d'un récepteur enregistreur pour qu'un autre récepteur puisse afficher un programme vidéo, mais plutôt d'utiliser une faible partie du débit d'émission de plusieurs récepteurs enregistreurs.

Dans une étape 1004, le serveur distant 109 détermine qui, en dehors de lui, parmi les récepteurs enregistreurs 101 à 108 possède des tronçons correspondant au programme vidéo à afficher. Pour ce faire, il parcourt les métadonnées correspondant au programme vidéo à afficher stockées dans sa base de données de programmes vidéo et recherche *K* récepteurs enregistreurs possédant des tronçons du programme vidéo à afficher. Pour chaque récepteur enregistreur identifié, le serveur distant 109 détermine si ce récepteur enregistreur n'est pas déjà impliqué dans une retransmission de tronçons. Un récepteur enregistreur déjà impliqué dans une retransmission de tronçons n'est pas réutilisé.

Lors d'une étape 1005, le serveur distant 109 vérifie le nombre *k* de récepteurs enregistreurs identifiés comme étant aptes à transmettre des tronçons du programme demandé. Si *k<K,* le nombre *k* de récepteurs enregistreurs identifiés est inférieur au nombre *K* de récepteurs enregistreurs à utiliser, le serveur distant 109 se substitue aux *K-k* récepteurs enregistreurs manquants. Le serveur distant 109 participe donc à la transmission des tronçons pour l'affichage du programme vidéo demandé par le récepteur enregistreur 101. Dans un cas particulier, si aucun récepteur enregistreur ne possède de tronçons pour le programme vidéo demandé, le serveur distant 109 est seul à transmettre les tronçons.

Suite à l'étape 1006 où si au moins *K* récepteurs enregistreurs aptes à transmettre les tronçons correspondant au programme vidéo demandés ont été identifiés, le serveur distant 109 met en oeuvre une étape 1007 au cours de laquelle il crée une liste contenant, pour chaque tronçon du flux binaire correspondant au programme demandé, une information indiquant à quelle période du programme vidéo le tronçon correspond, ou l'indice du tronçon et une information indiquant où trouver le tronçon. Cette liste correspond à la liste reçue par le récepteur enregistreur 101 lors de l'étape 903.

Lors de l'étape 1008, la liste est envoyée au récepteur enregistreur 101 pour qu'il puisse poursuivre la mise en oeuvre du procédé de la Fig. 9.

Dans un mode de réalisation, si plus de *K* récepteurs enregistreurs aptes à transmettre des tronçons correspondant au programme vidéo à afficher sont identifiés lors de l'étape 1004, le serveur distant 109 en désigne *K* aléatoirement.

Dans un mode de réalisation, si plus de *K* récepteurs enregistreurs aptes à transmettre des tronçons correspondant au programme vidéo à afficher sont identifiés lors de l'étape 1004, le serveur distant 109 en désigne *K* sur un critère de distance entre les récepteurs enregistreurs. Les récepteurs enregistreurs les plus proches du récepteur enregistreur 101 sont choisis. On calcule une distance entre deux récepteurs enregistreurs en comptant un nombre de routeurs à traverser pour que les deux récepteurs enregistreurs puissent communiquer. Deux récepteurs enregistreurs sont déclarés proches si le nombre de routeurs à traverser pour communiquer entre les deux récepteurs enregistreurs est faible.

Dans un mode de réalisation, si plus de *K* récepteurs enregistreurs aptes à transmettre des tronçons correspondant au programme vidéo à afficher sont identifiés lors de l'étape 1004, le serveur distant 109 en désigne *K* sur un critère d'appartenance à un même fournisseur d'accès à internet. Les récepteurs enregistreurs appartenant à des utilisateurs abonnés à un même fournisseur d'accès à internet sont privilégiés.

## Revendications

1. Procédé d'enregistrement d'un programme vidéo, ledit programme vidéo étant reçu sous la forme d'un flux binaire par au moins un récepteur, dit récepteur enregistreur, devant enregistrer le programme vidéo sur un serveur distant, chaque récepteur enregistreur étant relié au serveur distant par un réseau de communication et étant **caractérisé par** un débit d'émission, le flux binaire étant **caractérisé par** un débit d'encodage, **caractérisé en ce que** le procédé est mis en oeuvre par chaque récepteur enregistreur et **en ce que** pour un récepteur enregistreur, le procédé comprend les étapes suivantes :
- obtenir (3051) une valeur, dite facteur de compression, utilisé par le récepteur enregistreur pour déterminer quelle sous-partie du flux binaire envoyer au serveur distant, le facteur de compression étant calculé en fonction de valeur représentative du débit d'encodage du programme vidéo à enregistrer et d'une valeur représentative du débit d'émission du récepteur enregistreur ;
- division (3054) du flux binaire en un ensemble de tronçons successifs de taille fixe, et ordonner lesdits tronçons en fonction de leur ordre d'apparition dans le flux binaire ;
- détermination (3055) d'un sous ensemble de tronçons à transmettre au serveur distant à partir dudit ensemble en sélectionnant dans ledit ensemble des tronçons espacés d'un nombre de tronçons égal au facteur de compression en parcourant ledit ensemble à partir d'un tronçon correspondant à une valeur de décalage, la valeur de décalage étant un reste d'une division entière d'un nombre aléatoire déterminé par le récepteur enregistreur par le facteur de compression ; et,
- transmission (307) des tronçons du sous ensemble de tronçons déterminé au serveur distant en vue de leur sauvegarde, la transmission étant empêchée par le serveur distant s'il s'avère qu'un autre récepteur enregistreur a déjà envoyé une même valeur de décalage au serveur distant.

2. Procédé selon la revendication 1, **caractérisé en ce que** le facteur de compression est calculé en outre en fonction, d'un nombre de récepteurs enregistreurs devant enregistrer le programme vidéo, d'un nombre de connexions admises par le serveur distant et/ou d'un nombre de programmes vidéo enregistrés simultanément par le récepteur enregistreur.

3. Procédé selon la revendication 2, **caractérisé en ce que** le facteur de compression est calculé par le récepteur enregistreur ou par le serveur distant qui le transmet au récepteur enregistreur.

4. Procédé selon la revendication 1, 2 ou 3, **caractérisé en ce que** la taille des tronçons de l'ensemble de tronçons successifs est mesurée selon une mesure de taille représentative d'un nombre de données binaires.

5. Procédé selon la revendication 1, 2 ou 3, **caractérisé en ce que** la taille des tronçons de l'ensemble de tronçons successifs est mesurée selon une mesure de taille représentative d'une durée, chaque tronçon de l'ensemble de tronçons successifs correspondant à un intervalle de temps fixe dans le programme vidéo.

6. Procédé selon l'une quelconque des revendications 1 à 5, **caractérisé en ce que**, préalablement à la transmission des tronçons du sous ensemble de tronçons, le récepteur enregistreur transmet (306) au serveur distant un ensemble de métadonnées représentatives du programme vidéo comprenant la valeur de décalage, le facteur de compression et une valeur représentative de la taille des tronçons.

7. Procédé selon l'une quelconque des revendications 1 à 6, **caractérisé en ce que** le récepteur enregistreur sauvegarde en outre des tronçons de l'ensemble de tronçons successifs ou des tronçons du sous ensemble de tronçons dans une unité de stockage locale du serveur distant.

8. Procédé selon la revendication 7, **caractérisé en ce que** le récepteur enregistreur envoie périodiquement (703) une demande d'autorisation de suppression de tronçons au serveur distant, et, en cas de réception d'une réponse positive à une demande d'autorisation de suppression de tronçon, efface des tronçons enregistrés dans l'unité de stockage locale.

9. Procédé selon la revendication 7, **caractérisé en ce que** suite à l'enregistrement d'au moins une partie du flux binaire sur le serveur distant, le récepteur enregistreur transmet (902) au serveur distant une demande d'affichage du programme vidéo, reçoit (908) des tronçons correspondant au flux binaire de la part du serveur distant et/ou d'au moins un autre récepteur enregistreur ayant sauvegardé des tronçons du flux binaire et reconstitue (911) le flux binaire en vue de son affichage.

10. Procédé d'enregistrement d'un programme vidéo, ledit programme vidéo étant reçu sous la forme d'un flux binaire par au moins un récepteur, dit récepteur enregistreur, devant enregistrer le programme vidéo sur un serveur distant, chaque récepteur enregistreur étant relié au serveur distant par un réseau de communication et étant **caractérisé par** un débit d'émission, le flux binaire étant **caractérisé par** un débit d'encodage, le procédé comprend, lorsqu'il est mis en oeuvre par le serveur distant, les étapes suivantes :
- obtention (503) d'au moins un ensemble de métadonnées, chaque ensemble de métadonnées ayant été transmis par un récepteur enregistreur et comprenant une valeur de décalage, la valeur de décalage étant un reste d'une division entière d'un nombre aléatoire déterminé par le récepteur enregistreur par une valeur, dite facteur de compression, obtenu par le récepteur enregistreur, le facteur de compression étant utilisé par le récepteur enregistreur pour déterminer quelle sous-partie du flux binaire envoyer au serveur distant, le facteur de compression étant calculé en fonction d'une valeur représentative du débit d'encodage du programme vidéo à enregistrer et d'une valeur représentative du débit d'émission du récepteur enregistreur
- recherche (504) de récepteurs enregistreurs associés à une même valeur de décalage dans un ensemble de récepteurs enregistreurs ayant transmis des métadonnées pour le programme vidéo pour conserver un seul récepteur pour chaque valeur de décalage reçue ;
- réception (507) du flux binaire sous forme de tronçons de la part de chaque récepteur enregistreur conservé, chaque récepteur enregistreur ayant divisé le flux binaire en un ensemble de tronçons successifs de taille fixe, et ordonné lesdits tronçons en fonction de leur ordre d'apparition dans le flux binaire, et ayant déterminé les tronçons qu'il transmet en sélectionnant dans ledit ensemble des tronçons espacés d'un nombre de tronçons égal au facteur de compression en parcourant ledit ensemble à partir d'un tronçon correspondant à une valeur de décalage, et
- reconstitution (508) du flux binaire en vue de son stockage dans une unité de stockage du serveur distant.

11. Procédé selon la revendication 10, **caractérisé en ce que**, lorsqu'après réception des tronçons de la part d'au moins un récepteur enregistreur pour chaque valeur de décalage différente reçue, l'absence de certains tronçons empêche la reconstitution du flux binaire, le serveur distant transmet (510) à au moins un récepteur enregistreur une information représentative d'au moins un tronçon manquant, de sorte à provoquer l'envoi de chaque tronçon manquant.

12. Procédé selon la revendication 10 ou 11, **caractérisé en ce que**, suite à la réception d'une demande d'autorisation d'effacement de tronçons de la part d'un récepteur enregistreur, le serveur distant transmet une autorisation d'effacement au récepteur enregistreur comprenant une liste de tronçons à effacer.

13. Procédé selon la revendication 10, 11 ou 12, **caractérisé en ce que**, préalablement à une ouverture d'une connexion (804) pour au moins un récepteur enregistreur pour chaque valeur de décalage différente reçue, le serveur distant attend (801) un délai prédéfini.

14. Procédé selon l'une quelconque des revendications 10 à 13, **caractérisé en ce que**, lors de la réception d'un tronçon, chaque tronçon est associé à un descripteur comprenant une information représentative de la position du tronçon dans le flux binaire et une information représentative du récepteur enregistreur ayant transmis le tronçon.

15. Procédé selon la revendication 14, **caractérisé en ce que** lorsque, suite à la reconstitution du flux binaire, le serveur distant reçoit une demande d'affichage du programme vidéo de la part d'un premier récepteur enregistreur, le serveur distant construit (1007) une liste indiquant pour au moins un tronçon du flux binaire, au moins un second récepteur enregistreur comprenant une unité de stockage locale dans laquelle ledit tronçon est sauvegardé.

16. Dispositif récepteur apte à enregistrer à distance un flux binaire représentatif d'un programme vidéo sur un serveur distant, **caractérisé en ce que** le dispositif récepteur comprend :
- des moyens d'obtention (3051) d'une valeur, dite facteur de compression, le facteur de compression étant utilisé par le dispositif récepteur pour déterminer quelle sous-partie du flux binaire envoyer au serveur distant, le facteur de compression étant calculé en fonction d'une valeur représentative d'un débit d'encodage du programme vidéo à enregistrer et d'une valeur représentative d'un débit d'émission du dispositif récepteur ;
- des moyens de division (3054) du flux binaire en un ensemble de tronçons successifs de taille fixe, et des moyens pour ordonner lesdits tronçons en fonction de leur ordre d'apparition dans le flux binaire ;
- des moyens de détermination (3055) d'un sous ensemble de tronçons à transmettre à un dispositif serveur distant à partir dudit ensemble en sélectionnant dans ledit ensemble des tronçons espacés d'un nombre de tronçons égal au facteur de compression en parcourant ledit ensemble à partir d'un tronçon correspondant à une valeur de décalage, la valeur de décalage étant un reste d'une division entière d'un nombre aléatoire déterminé par le dispositif récepteur par le facteur de compression ;des moyens de transmission (307) des tronçons du sous-ensemble de tronçons déterminés au dispositif serveur distant en vue de leur sauvegarde, la transmission étant empêchée par le serveur s'il s'avère qu'un autre récepteur enregistreur a déjà envoyé une même valeur de décalage au serveur distant.

17. Dispositif serveur apte à enregistrer un flux binaire représentatif d'un programme vidéo, **caractérisé en ce que** le dispositif serveur comprend :
- des moyens d'obtention (503) d'au moins un ensemble de métadonnées, chaque ensemble de métadonnées ayant été transmis par un dispositif récepteur et comprenant une valeur de décalage, la valeur de décalage étant un reste d'une division entière d'un nombre aléatoire déterminé par le dispositif récepteur par un nombre, dit facteur de compression, obtenu par le dispositif récepteur, le facteur de compression étant utilisé par le dispositif récepteur pour déterminer quelle sous-partie du flux binaire envoyer au serveur distant, le facteur de compression étant calculé en fonction d'une valeur représentative d'un débit d'encodage du programme vidéo à enregistrer et d'une valeur représentative d'un débit d'émission du dispositif récepteur ;
- des moyens de recherche (504) de dispositifs récepteurs associés à une même valeur de décalage dans un ensemble de dispositifs récepteurs ayant transmis des métadonnées pour le programme vidéo pour conserver un seul dispositif récepteur pour chaque valeur de décalage reçue ;
- des moyens de réception (507) du flux binaire sous forme de tronçons de la part de chaque dispositif récepteur conservé, chaque dispositif récepteur ayant divisé le flux binaire en un ensemble de tronçons successifs de taille fixe, et ayant ordonné lesdits tronçons en fonction de leur ordre d'apparition dans le flux binaire , et ayant déterminé les tronçons qu'il transmet en sélectionnant dans ledit ensemble des tronçons espacés d'un nombre de tronçons égal au facteur de compression en parcourant ledit ensemble à partir d'un tronçon correspondant à une valeur de décalage, et
- des moyens de reconstitution (508) du flux binaire en vue de son stockage dans une unité de stockage du dispositif serveur.

18. Système d'enregistrement de programmes vidéo comprenant au moins un dispositif récepteur selon la revendication 16 et un dispositif serveur selon la revendication 17.

19. Produit programme d'ordinateur, **caractérisé en ce qu'**il comporte des instructions pour mettre en oeuvre, par un dispositif, le procédé selon l'une quelconque des revendications 1 à 9 ou le procédé selon l'une quelconque des revendications 10 à 15, lorsque ledit programme est exécuté par un processeur dudit dispositif.

20. Moyens de stockage, **caractérisés en ce qu'**ils stockent un programme d'ordinateur comportant des instructions pour mettre en oeuvre, par un dispositif, le procédé selon l'une quelconque des revendications 1 à 9 ou le procédé selon l'une quelconque des revendications 10 à 15 lorsque ledit programme est exécuté par un processeur dudit dispositif.

## Patentansprüche

1. Verfahren zur Aufzeichnung eines Videoprogramms, wobei das Videoprogramm in Form eines Bitstroms von mindestens einem Empfänger, aufzeichnender Empfänger genannt, empfangen wird, der das Videoprogramm auf einem entfernten Server aufzeichnen soll, wobei jeder aufzeichnende Empfänger mit dem entfernten Server über ein Kommunikationsnetzwerk verbunden ist und durch eine Senderate gekennzeichnet ist, wobei der Bitstrom durch eine Codierungsrate **gekennzeichnet ist, dadurch** gekennzeichnet, dass das Verfahren von jedem aufzeichnenden Empfänger ausgeführt wird und dass das Verfahren bei einem aufzeichnenden Empfänger die folgenden Schritte umfasst:
- Erhalten (3051) eines Werts, Kompressionsfaktor genannt, der vom aufzeichnenden Empfänger verwendet wird, um zu bestimmen, welcher Subteil des Bitstroms an den entfernten Server gesendet wird, wobei der Kompressionsfaktor in Abhängigkeit von einem für die Codierungsrate des aufzuzeichnenden Videoprogramms repräsentativen Wert und von einem für die Senderate des aufzeichnenden Empfängers repräsentativen Wert berechnet wird;
- Teilen (3054) des Bitstroms in eine Menge aufeinanderfolgender Abschnitte von fester Größe und Ordnen der Abschnitte in Abhängigkeit von ihrer Erscheinungsreihenfolge in dem Bitstrom;
- Bestimmen (3055) einer Teilmenge von Abschnitten, die an den entfernten Server zu übertragen sind, ausgehend von der Menge, indem in der Menge Abschnitte gewählt werden, die um eine Anzahl von Abschnitten gleich dem Kompressionsfaktor beabstandet sind, wobei die Menge ausgehend von einem Abschnitt durchlaufen wird, der einem Offset-Wert entspricht, wobei der Offset-Wert ein Rest einer ganzzahligen Division einer Zufallszahl ist, die vom aufzeichnenden Empfänger **durch** den Kompressionsfaktor bestimmt wird; und
- Übertragen (307) der Abschnitte der bestimmten Teilmenge von Abschnitten an den entfernten Server zu ihrer Speicherung, wobei die Übertragung vom entfernten Server verhindert wird, wenn sich herausstellt, dass bereits ein anderer aufzeichnender Empfänger denselben Offset-Wert an den entfernten Server gesendet hat.

2. Verfahren nach Anspruch 1, **dadurch gekennzeichnet, dass** der Kompressionsfaktor ferner in Abhängigkeit von einer Anzahl von aufzeichnenden Empfängern, die das Videoprogramm aufzeichnen sollen, von einer Anzahl von Verbindungen, die vom entfernten Server zugelassen werden, und/oder von einer Anzahl von Videoprogrammen, die vom aufzeichnenden Empfänger gleichzeitig aufgezeichnet werden, berechnet wird.

3. Verfahren nach Anspruch 2, **dadurch gekennzeichnet, dass** der Kompressionsfaktor vom aufzeichnenden Empfänger oder vom entfernten Server berechnet wird, der ihn an den aufzeichnenden Empfänger überträgt.

4. Verfahren nach Anspruch 1, 2 oder 3, **dadurch gekennzeichnet, dass** die Größe der Abschnitte der Menge aufeinanderfolgender Abschnitte nach einem Größenmaß gemessen wird, das für eine Anzahl von binären Daten repräsentativ ist.

5. Verfahren nach Anspruch 1, 2 oder 3, **dadurch gekennzeichnet, dass** die Größe der Abschnitte der Menge aufeinanderfolgender Abschnitte nach einem Größenmaß gemessen wird, das für eine Dauer repräsentativ ist, wobei jeder Abschnitt der Menge aufeinanderfolgender Abschnitte einem festen Zeitintervall in dem Videoprogramm entspricht.

6. Verfahren nach einem der Ansprüche 1 bis 5, **dadurch gekennzeichnet, dass** der aufzeichnende Empfänger an den entfernter Server, vor dem Übertragen der Abschnitte der Teilmenge von Abschnitten, eine Menge von für das Videoprogramm repräsentativen Metadaten überträgt (306), die den Offset-Wert, den Kompressionsfaktor und einen für die Größe der Abschnitte repräsentativen Wert umfassen.

7. Verfahren nach einem der Ansprüche 1 bis 6, **dadurch gekennzeichnet, dass** der aufzeichnende Empfänger ferner Abschnitte der Menge aufeinanderfolgender Abschnitte oder Abschnitte der Teilmenge von Abschnitten in einer lokalen Speichereinheit des entfernten Servers speichert.

8. Verfahren nach Anspruch 7, **dadurch gekennzeichnet, dass** der aufzeichnende Empfänger periodisch eine Abschnittslöschgenehmigungsanfrage an den entfernten Server sendet (703) und im Fall einer positiven Antwort auf eine Abschnittslöschgenehmigungsanfrage in der lokalen Speichereinheit aufgezeichnete Abschnitte löscht.

9. Verfahren nach Anspruch 7, **dadurch gekennzeichnet, dass** der aufzeichnende Empfänger an den entfernten Server, nach dem Aufzeichnen mindestens eines Teils des Bitstroms auf dem entfernten Server, eine Videoprogrammanzeigeanforderung überträgt (902), dem Bitstrom entsprechende Abschnitte seitens des entfernten Servers und/oder mindestens eines anderen aufzeichnenden Empfängers, der Abschnitte des Bitstroms gespeichert hat, empfängt (908) und den Bitstrom mit Blick auf seine Anzeige wiederherstellt (911).

10. Verfahren zur Aufzeichnung eines Videoprogramms, wobei das Videoprogramm in Form eines Bitstroms von mindestens einem Empfänger, aufzeichnender Empfänger genannt, empfangen wird, der das Videoprogramm auf einem entfernten Server aufzeichnen soll, wobei jeder aufzeichnende Empfänger mit dem entfernten Server über ein Kommunikationsnetzwerk verbunden ist und durch eine Senderate gekennzeichnet ist, wobei der Bitstrom durch eine Codierungsrate gekennzeichnet ist, wobei das Verfahren, wenn es vom entfernten Server ausgeführt wird, die folgenden Schritte umfasst:
- Erhalten (503) mindestens einer Menge von Metadaten, wobei jede Menge von Metadaten von einem aufzeichnenden Empfänger übertragen wurde und einen Offset-Wert umfasst, wobei der Offset-Wert ein Rest einer ganzzahligen Division einer Zufallszahl ist, die vom aufzeichnenden Empfänger durch einen Wert, Kompressionsfaktor genannt, bestimmt wird, der vom aufzeichnenden Empfänger erhalten wird, wobei der Kompressionsfaktor vom aufzeichnenden Empfänger verwendet wird, um zu bestimmen, welcher Subteil des Bitstroms an den entfernten Server gesendet wird, wobei der Kompressionsfaktor in Abhängigkeit von einem für die Codierungsrate des aufzuzeichnenden Videoprogramms repräsentativen Wert und von einem für die Senderate des aufzeichnenden Empfängers repräsentativen Wert berechnet wird;
- Suchen (504) von aufzeichnenden Empfängern, die demselben Offset-Wert zugeordnet sind, in einer Menge von aufzeichnenden Empfängern, die Metadaten für das Videoprogramm übertragen haben, um nur einen einzigen Empfänger für jeden empfangenen Offset-Wert zu behalten;
- Empfangen (507) des Bitstroms in Form von Abschnitten seitens jedes behaltenen aufzeichnenden Empfängers, wobei jeder aufzeichnende Empfänger den Bitstrom in eine Menge aufeinanderfolgender Abschnitte von fester Größe geteilt hat und die Abschnitte in Abhängigkeit von ihrer Erscheinungsreihenfolge im Bitstrom geordnet hat und die Abschnitte, die er überträgt, bestimmt hat, indem er in der Menge Abschnitte auswählt, die um eine Anzahl von Abschnitten gleich dem Kompressionsfaktor beabstandet sind, wobei er die Menge ausgehend von einem Abschnitt durchläuft, der einem Offset-Wert entspricht, und
- Wiederherstellen (508) des Bitstroms mit Blick auf seine Speicherung in einer Speichereinheit des entfernten Servers.

11. Verfahren nach Anspruch 10, **dadurch gekennzeichnet, dass** der entfernte Server, wenn nach dem Empfangen der Abschnitte seitens mindestens eines aufzeichnenden Empfängers für jeden empfangenen unterschiedlichen Offset-Wert das Fehlen bestimmter Abschnitte das Wiederherstellen des Bitstroms verhindert, an mindestens einen aufzeichnenden Empfänger eine für mindestens einen fehlenden Abschnitt repräsentative Information überträgt (510), so dass das Senden jedes fehlenden Abschnitts ausgelöst wird.

12. Verfahren nach Anspruch 10 oder 11, **dadurch gekennzeichnet, dass** der entfernte Server nach dem Empfangen einer Abschnittslöschgenehmigungsanfrage seitens eines aufzeichnenden Empfängers eine Löschgenehmigung an den aufzeichnenden Empfänger sendet, die eine Liste von zu löschenden Abschnitten umfasst.

13. Verfahren nach Anspruch 10, 11 oder 12, **dadurch gekennzeichnet, dass** der entfernte Server vor dem Öffnen einer Verbindung (804) für mindestens einen aufzeichnenden Empfänger für jeden empfangenen unterschiedlichen Offset-Wert eine vorgegebene Zeit wartet (801).

14. Verfahren nach einem der Ansprüche 10 bis 13, **dadurch gekennzeichnet, dass** beim Empfangen eines Abschnitts jeder Abschnitt einem Deskriptor zugeordnet wird, der eine für die Position des Abschnitts in dem Bitstrom repräsentative Information und eine für den aufzeichnenden Empfänger, der den Abschnitt übertragen hat, repräsentative Information umfasst.

15. Verfahren nach Anspruch 14, **dadurch gekennzeichnet, dass**, wenn der entfernte Server nach dem Wiederherstellen des Bitstroms eine Videoprogrammanzeigeanforderung seitens eines ersten aufzeichnenden Empfängers empfängt, der entfernte Server eine Liste erstellt (1007), die für mindestens einen Abschnitt des Bitstroms mindestens einen zweiten aufzeichnenden Empfänger angibt, der eine lokale Speichereinheit umfasst, in welcher der Abschnitt gespeichert ist.

16. Empfängervorrichtung, die geeignet ist, einen für ein Videoprogramm repräsentativen Bitstrom auf einem entfernten Server fernaufzuzeichnen, **dadurch gekennzeichnet, dass** die Empfängervorrichtung umfasst:
- Mittel zum Erhalten (3051) eines Werts, Kompressionsfaktor genannt, wobei der Kompressionsfaktor von der Empfängervorrichtung verwendet wird, um zu bestimmen, welcher Subteil des Bitstroms an den entfernten Server gesendet wird, wobei der Kompressionsfaktor in Abhängigkeit von einem für eine Codierungsrate des aufzuzeichnenden Videoprogramms repräsentativen Wert und von einem für eine Senderate der Empfängervorrichtung repräsentativen Wert berechnet wird;
- Mittel zum Teilen (3054) des Bitstroms in eine Menge aufeinanderfolgender Abschnitte von fester Größe und Mittel zum Ordnen der Abschnitte in Abhängigkeit von ihrer Erscheinungsreihenfolge in dem Bitstrom;
- Mittel zum Bestimmen (3055) einer Teilmenge von Abschnitten, die an eine entfernte Servervorrichtung zu übertragen sind, ausgehend von der Menge, indem in der Menge Abschnitte gewählt werden, die um eine Anzahl von Abschnitten gleich dem Kompressionsfaktor beabstandet sind, wobei die Menge ausgehend von einem Abschnitt durchlaufen wird, der einem Offset-Wert entspricht, wobei der Offset-Wert ein Rest einer ganzzahligen Division einer Zufallszahl ist, die von der Empfängervorrichtung durch den Kompressionsfaktor bestimmt wird; Mittel zum Übertragen (307) der Abschnitte der bestimmten Teilmenge von Abschnitten an die entfernte Servervorrichtung mit Blick auf ihre Speicherung, wobei die Übertragung vom Server verhindert wird, wenn sich herausstellt, dass bereits ein anderer aufzeichnender Empfänger denselben Offset-Wert an den entfernten Server gesendet hat.

17. Servervorrichtung, die geeignet ist, einen für ein Videoprogramm repräsentativen Bitstrom aufzuzeichnen, **dadurch gekennzeichnet, dass** die Servervorrichtung umfasst:
- Mittel zum Erhalten (503) mindestens einer Menge von Metadaten, wobei jede Menge von Metadaten von einer Empfängervorrichtung übertragen wurde und einen Offset-Wert umfasst, wobei der Offset-Wert ein Rest einer ganzzahligen Division einer Zufallszahl ist, die von der Empfängervorrichtung durch eine Zahl, Kompressionsfaktor genannt, bestimmt wird, die von der Empfängervorrichtung erhalten wird, wobei der Kompressionsfaktor von der Empfängervorrichtung verwendet wird, um zu bestimmen, welcher Subteil des Bitstroms an den entfernten Server gesendet wird, wobei der Kompressionsfaktor in Abhängigkeit von einem für eine Codierungsrate des aufzuzeichnenden Videoprogramms repräsentativen Wert und von einem für eine Senderate der Empfängervorrichtung repräsentativen Wert berechnet wird;
- Mittel zum Suchen (504) von Empfängervorrichtungen, die demselben Offset-Wert zugeordnet sind, in einer Menge von Empfängervorrichtungen, die Metadaten für das Videoprogramm übertragen haben, um nur eine einzige Empfängervorrichtung für jeden empfangenen Offset-Wert zu behalten;
- Mittel zum Empfangen (507) des Bitstroms in Form von Abschnitten seitens jeder behaltenen Empfängervorrichtung, wobei jede Empfängervorrichtung den Bitstrom in eine Menge aufeinanderfolgender Abschnitte von fester Größe geteilt hat und die Abschnitte in Abhängigkeit von ihrer Erscheinungsreihenfolge in dem Bitstrom geordnet hat und die Abschnitte, die sie überträgt, bestimmt hat, indem sie in der Menge Abschnitte auswählt, die um eine Anzahl von Abschnitten gleich dem Kompressionsfaktor beabstandet sind, wobei sie die Menge ausgehend von einem Abschnitt durchläuft, der einem Offset-Wert entspricht, und
- Mittel zum Wiederherstellen (508) des Bitstroms mit Blick auf seine Speicherung in einer Speichereinheit der Servervorrichtung.

18. System zum Aufzeichnen von Videoprogrammen, umfassend mindestens eine Empfängervorrichtung nach Anspruch 16 und eine Servervorrichtung nach Anspruch 17.

19. Computerprogrammprodukt, **dadurch gekennzeichnet, dass** es Anweisungen umfasst, um durch eine Vorrichtung bei der Ausführung des Programms durch einen Prozessor der Vorrichtung das Verfahren nach einem der Ansprüche 1 bis 9 oder das Verfahren nach einem der Ansprüche 10 bis 15 auszuführen.

20. Speichermedien, **dadurch gekennzeichnet, dass** sie ein Computerprogramm speichern, das Anweisungen umfasst, um durch eine Vorrichtung bei der Ausführung des Programms durch einen Prozessor der Vorrichtung das Verfahren nach einem der Ansprüche 1 bis 9 oder das Verfahren nach einem der Ansprüche 10 bis 15 auszuführen.

## Claims

1. Method for recording a video program, said video program being received in the form of a bitstream by at least one receiver, a so-called recorder receiver, having to record the video program on a remote server, each recorder receiver being linked to the remote server by a communication network and being **characterized by** an emission bitrate, the bitstream being **characterized by** an encoding bitrate, **characterized in that** the method is implemented by each recorder receiver and **in that** for a recorder receiver, the method comprises the following steps:
- obtaining (3051) a value, so-called compression factor, used by the recorder receiver to determine which sub-part of the bitstream to dispatch to the remote server, the compression factor being calculated as a function of the value representative of the encoding bitrate of the video program to be recorded and of a value representative of the emission bitrate of the recorder receiver;
- division (3054) of the bitstream into a set of successive segments of fixed size, and ordering said segments as a function of their order of appearance in the bitstream;
- determination (3055) of a subset of segments to be transmitted to the remote server on the basis of said set by selecting in said set segments spaced apart by a number of segments which is equal to the compression factor by traversing said set on the basis of a segment corresponding to a shift value, the shift value being a remainder of an integer division of a random number determined by the recorder receiver by the compression factor; and
- transmission (307) of the segments of the determined subset of segments to the remote server with a view to their saving, transmission being prevented by the remote server if it transpires that another recorder receiver has already dispatched one and the same shift value to the remote server.

2. Method according to Claim 1, **characterized in that** the compression factor is calculated furthermore as a function of a number of recorder receivers having to record the video program, of a number of connections admitted by the remote server and/or of a number of video programs recorded simultaneously by the recorder receiver.

3. Method according to Claim 2, **characterized in that** the compression factor is calculated by the recorder receiver or by the remote server which transmits it to the recorder receiver.

4. Method according to Claim 1, 2 or 3, **characterized in that** the size of the segments of the set of successive segments is measured according to a measurement of size representative of a number of binary data.

5. Method according to Claim 1, 2 or 3, **characterized in that** the size of the segments of the set of successive segments is measured according to a measurement of size representative of a duration, each segment of the set of successive segments corresponding to a fixed time interval in the video program.

6. Method according to any one of Claims 1 to 5, **characterized in that**, prior to the transmission of the segments of the subset of segments, the recorder receiver transmits (306) to the remote server a set of metadata representative of the video program comprising the shift value, the compression factor and a value representative of the size of the segments.

7. Method according to any one of Claims 1 to 6, **characterized in that** the recorder receiver furthermore saves segments of the set of successive segments or segments of the subset of segments in a local storage unit of the remote server.

8. Method according to Claim 7, **characterized in that** the recorder receiver dispatches periodically (703) a request for authorization of deletion of segments to the remote server, and, in case of reception of a positive response to a segment deletion authorization request, erases segments recorded in the local storage unit.

9. Method according to Claim 7, **characterized in that**, subsequent to the recording of at least one part of the bitstream on the remote server, the recorder receiver transmits (902) to the remote server a request for display of the video program, receives (908) segments corresponding to the bitstream on the part of the remote server and/or of at least one other recorder receiver having saved segments of the bitstream and reconstructs (911) the bitstream with a view to its display.

10. Method for recording a video program, said video program being received in the form of a bitstream by at least one receiver, a so-called recorder receiver, having to record the video program on a remote server, each recorder receiver being linked to the remote server by a communication network and being **characterized by** an emission bitrate, the bitstream being **characterized by** an encoding bitrate, the method comprises, when it is implemented by the remote server, the following steps:
- obtaining (503) of at least one set of metadata, each set of metadata having been transmitted by a recorder receiver and comprising a shift value, the shift value being a remainder of an integer division of a random number determined by the recorder receiver by a value, so-called compression factor, obtained by the recorder receiver, the compression factor being used by the recorder receiver to determine which sub-part of the bitstream to dispatch to the remote server, the compression factor being calculated as a function of a value representative of the encoding bitrate of the video program to be recorded and of a value representative of the emission bitrate of the recorder receiver;
- searching (504) for recorder receivers associated with one and the same shift value in a set of recorder receivers having transmitted metadata for the video program so as to retain a single receiver for each shift value received;
- reception (507) of the bitstream in the form of segments on the part of each recorder receiver retained, each recorder receiver having divided the bitstream into a set of successive segments of fixed size, and ordered said segments as a function of their order of appearance in the bitstream, and having determined the segments that it transmits by selecting in said set segments spaced apart by a number of segments which is equal to the compression factor by traversing said set on the basis of a segment corresponding to a shift value, and
- reconstruction (508) of the bitstream with a view to its storage in a storage unit of the remote server.

11. Method according to Claim 10, **characterized in that**, when after reception of the segments on the part of at least one recorder receiver for each different shift value received the absence of certain segments prevents the reconstruction of the bitstream, the remote server transmits (510) to at least one recorder receiver an information item representative of at least one missing segment, so as to cause the dispatching of each missing segment.

12. Method according to Claim 10 or 11, **characterized in that**, subsequent to the reception of a request for authorization of erasure of segments on the part of a recorder receiver, the remote server transmits an erasure authorization to the recorder receiver comprising a list of segments to be erased.

13. Method according to Claim 10, 11 or 12, **characterized in that**, prior to an opening of a connection (804) for at least one recorder receiver for each different shift value received, the remote server waits (801) for a predefined timespan.

14. Method according to any one of Claims 10 to 13, **characterized in that**, upon reception of a segment, each segment is associated with a descriptor comprising an information item representative of the position of the segment in the bitstream and an information item representative of the recorder receiver having transmitted the segment.

15. Method according to Claim 14, **characterized in that** when, subsequent to the reconstruction of the bitstream, the remote server receives a request for display of the video program on the part of a first recorder receiver, the remote server constructs (1007) a list indicating, for at least one segment of the bitstream, at least one second recorder receiver comprising a local storage unit in which said segment is saved.

16. Receiver device able to remotely record a bitstream representative of a video program on a remote server, **characterized in that** the receiver device comprises:
- means of obtaining (3051) a value, so-called compression factor, the compression factor being used by the receiver device to determine which sub-part of the bitstream to dispatch to the remote server, the compression factor being calculated as a function of a value representative of an encoding bitrate of the video program to be recorded and of a value representative of an emission bitrate of the receiver device;
- means of dividing (3054) the bitstream into a set of successive segments of fixed size, and means for ordering said segments as a function of their order of appearance in the bitstream;
- means of determining (3055) a subset of segments to be transmitted to a remote server device on the basis of said set by selecting in said set segments spaced apart by a number of segments which is equal to the compression factor by traversing said set on the basis of a segment corresponding to a shift value, the shift value being a remainder of an integer division of a random number determined by the receiver device by the compression factor; means of transmitting (307) the segments of the determined subset of segments to the remote server device with a view to their saving, transmission being prevented by the server if it transpires that another recorder receiver has already dispatched one and the same shift value to the remote server.

17. Server device able to record a bitstream representative of a video program, **characterized in that** the server device comprises:
- means of obtaining (503) at least one set of metadata, each set of metadata having been transmitted by a receiver device and comprising a shift value, the shift value being a remainder of an integer division of a random number determined by the receiver device by a number, the so-called compression factor, obtained by the receiver device, the compression factor being used by the receiver device to determine which sub-part of the bitstream to dispatch to the remote server, the compression factor being calculated as a function of a value representative of an encoding bitrate of the video program to be recorded and of a value representative of an emission bitrate of the receiver device;
- means of searching (504) for receiver devices associated with one and the same shift value in a set of receiver devices having transmitted metadata for the video program so as to retain a single receiver device for each shift value received;
- means for receiving (507) the bitstream in the form of segments on the part of each receiver device retained, each receiver device having divided the bitstream into a set of successive segments of fixed size, and having ordered said segments as a function of their order of appearance in the bitstream, and having determined the segments that it transmits by selecting in said set segments spaced apart by a number of segments which is equal to the compression factor by traversing said set on the basis of a segment corresponding to a shift value, and
- means of reconstructing (508) the bitstream with a view to its storage in a storage unit of the server device.

18. System for recording video programs comprising at least one receiver device according to Claim 16 and a server device according to Claim 17.

19. Computer program product, **characterized in that** it comprises instructions for implementing, by a device, the method according to any one of Claims 1 to 9 or the method according to any one of Claims 10 to 15, when said program is executed by a processor of said device.

20. Storage means, **characterized in that** they store a computer program comprising instructions for implementing, by a device, the method according to any one of Claims 1 to 9 or the method according to any one of Claims 10 to 15 when said program is executed by a processor of said device.
